(19)

Europäisches Patentamt

European Patent Office

Office européen des brevets

(11) **EP 4 617 227 A1**

(12) **EUROPEAN PATENT APPLICATION**
published in accordance with Art. 153(4) EPC

(43) Date of publication:
**17.09.2025  Bulletin 2025/38**

(21) Application number: **23888675.8**

(22) Date of filing: **07.11.2023**

(51) International Patent Classification (IPC):
***B67C 3/00*** *(2006.01)*

(52) Cooperative Patent Classification (CPC):
**B67C 3/00**

(86) International application number:
**PCT/JP2023/039962**

(87) International publication number:
**WO 2024/101328 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022  JP 2022180248
27.01.2023  JP 2023010937**

(71) Applicant: **Dai Nippon Printing Co., Ltd.
Tokyo 162-8001 (JP)**

(72) Inventors:
• **ITO Shuta
Tokyo 162-8001 (JP)**
• **AKIYAMA Hayato
Tokyo 162-8001 (JP)**

(74) Representative: **Müller-Boré & Partner
Patentanwälte PartG mbB
Friedenheimer Brücke 21
80639 München (DE)**

(54) **LIQUID REPLACEMENT METHOD OF CONTINUOUS LIQUID STERILIZING DEVICE**

(57)    To provide a liquid replacement method for a continuous liquid sterilizing apparatus that can improve the availability of an aseptic filling machine and allow efficient production of liquid-filled products. In a liquid replacement method for a continuous liquid sterilizing apparatus that allows a liquid to flow therethrough and sterilizes the liquid by heating the liquid from outside, a first liquid is sterilized by the continuous liquid sterilizing apparatus, an inside of the continuous liquid sterilizing apparatus is cleaned by flowing a cleaning liquid at a flow rate higher than a flow rate of the first liquid while sterilizing the cleaning liquid by the continuous liquid sterilizing apparatus in such a manner that an F value does not become lower than a target F value, and a second liquid is flowed at a flow rate lower than the flow rate of the cleaning liquid while being sterilized by the continuous liquid sterilizing apparatus in such a manner that the F value does not become lower than the target F value.

FIG. 4

EP 4 617 227 A1

**Description**

Technical Field

The present invention relates to a liquid replacement method for a continuous liquid sterilizing apparatus that sterilizes a liquid, such as a drink, to be filled into a container, such as a bottle or a paper container.

Background Art

When a plastic bottle made of polyethylene terephthalate (PET), polyethylene (PE), polypropylene (PP) or the like, a molded container or a paper container is filled with a liquid such as a drink, any drink that can be spoiled by bacteria has to be sterilized to be aseptic by a continuous liquid sterilizing apparatus before the container is filled with the liquid. Furthermore, the inside of liquid supply piping including a surge tank, a feeding pipe, a head tank and filling nozzles through which the sterilized liquid is fed before the filling has to be cleaned in advance and sterilized to be aseptic.

In the sterilization of a liquid by the continuous liquid sterilizing apparatus, the F value that is a sterilization value for the liquid is calculated, and whether or not the liquid has been sterilized to such an extent that the quality of the liquid is assured is checked based on the historical information on the F value (see Patent Literatures 1 and 2).

Liquid supply piping of a liquid filling apparatus that fills a container with a liquid is subjected to a CIP (cleaning in place) process and an SIP (sterilizing in place) process regularly or when the kind of the product is changed, that is, when the liquid is replaced with another liquid (see Patent Literature 3).

According to Patent Literature 3, the CIP process is performed by flowing an alkaline cleaning liquid containing aseptic water and a sanitized alkaline chemical agent such as caustic soda as an additive and then an acidic cleaning liquid containing aseptic water and a sanitized acidic chemical agent as an additive through the flow path of the liquid supply piping from the inside of the piping to the filling nozzles of the filling machine. The CIP process is performed by heating the cleaning liquid to 85°C in the continuous liquid sterilizing apparatus and circulating the heated cleaning liquid in the liquid supply piping. In this way, the residue or the like of the previous liquid deposited in the liquid supply piping is removed. The inside of the liquid supply piping is sterilized at the same time.

The SIP process is performed before the liquid filling operation is started. The SIP process is a process for sterilizing the inside of the liquid supply piping in advance, and the sterilization process is performed at high temperature by flowing heated steam or hot water through the liquid supply piping cleaned by the CIP process (see Patent Literature 3).

After the CIP process and the SIP process are performed, a sterilization process for the liquid is performed by heating and sterilizing the liquid by the continuous liquid sterilizing apparatus arranged in the liquid supply piping while the liquid is flowing through the liquid supply piping. The sterilized liquid is filled into a container, such as a bottle, by an aseptic filling machine.

When performing the CIP process and the SIP process for the inside of the liquid supply piping, the SIP process is performed after the CIP process. However, if these processes are performed at the same time or continuously, the preparation time before filling of containers with the liquid can be reduced. In Patent Literature 3, it is described that the CIP process and the SIP process are performed at the same time.

In Patent Literature 4, it is described that downtime between the CIP process and the SIP process is eliminated, and the CIP process and the SIP process are performed at the same time or continuously by changing the temperature of the cleaning liquid used for the CIP process to the temperature required for the SIP process. It is also described that the F value is calculated from the heating holding duration determined from the sterilization temperature and the flow rate to manage the sterilization of water used to rinse out the cleaning liquid.

A method of reducing the transition preparation time when transitioning from the SIP process to the liquid filling process is also proposed. In Patent Literature 5, it is described that when transitioning from the SIP process for the inside of the liquid supply piping to a sterilization process for sterilizing the liquid to be filled by the continuous liquid sterilizing apparatus, the F value is calculated from the heating holding time determined from the flow rate of the liquid and the temperatures measured by a plurality of temperature sensors arranged at arbitrary positions, and the temperature and the flow rate of the continuous liquid sterilizing apparatus that has performed the SIP process are adjusted to the sterilization temperature and the flow rate of the liquid to be filled in such a manner that the F value does not become lower than a predetermined value.

Citation List

Patent Literature

Patent Literature 1
Japanese Patent Laid-Open No. 61-92555
Patent Literature 2
Japanese Patent Laid-Open No. 2007-215893
Patent Literature 3
Japanese Patent Laid-Open No. 2007-22600
Patent Literature 4
Japanese Patent Laid-Open No. 2018-58641
Patent Literature 5
Japanese Patent Laid-Open No. 2017-114496

Summary of Invention

Technical Problem

With an aseptic filling machine that fills sterilized containers with a liquid sterilized by a continuous liquid sterilizing apparatus in an aseptic atmosphere, before the containers are filled with the sterilized liquid, the inside of the liquid supply piping that is a flow path for the sterilized liquid to be filled into the containers is subjected to the CIP process and the SIP process. The CIP process and the SIP process take a long time, and thus, a method of reducing the process time has been proposed. With regard to the CIP process performed by circulating a cleaning liquid in the liquid supply piping, there have been proposed a method that involves adding a chemical agent having a sterilization effect to the cleaning liquid and a method that involves circulating the cleaning liquid by heating the cleaning liquid to the temperature required for the SIP process from the beginning of the CIP process, in the middle of the CIP process or after the CIP process is completed.

When the kind of the liquid to be filled is changed by stopping the aseptic filling machine, or when a residue of the liquid caused by heating in the sterilization is deposited after filling with the same kind of liquid is performed for a long time, the inside of the liquid supply piping is subjected to the CIP process and the SIP process.

When the kind of the liquid to be filled by the aseptic filling machine is successively changed, different processes, such as the CIP process and the SIP process for the liquid supply piping and the liquid sterilization process for filling with the liquid, are successively performed. When transitioning from the CIP process to the SIP process, a rinsing process is performed to rinse out the cleaning liquid used in the CIP process with aseptic water at room temperature, and therefore, the temperature of the continuous liquid sterilizing apparatus decreases, so that the temperature of the continuous liquid sterilizing apparatus needs to be increased to the temperature for the SIP process before starting the SIP process. Thus, there is a problem that the CIP process and the SIP process as a whole and the transition from the SIP process to the sterilization process for the liquid to be filled take a very long time. In view of this, it has been proposed that the time required for the CIP process and the SIP process is reduced by using the cleaning liquid used in the CIP process for the SIP process when transitioning from the CIP process to the SIP process.

When the liquid to be filled is changed in the aseptic filling machine, the CIP process has to be performed. This is because the liquid having been charged has to be removed, and the inside of the liquid supply piping in which the residue of the liquid having been charged is deposited has to be cleaned.

However, the SIP process does not necessarily have to be performed. While containers are filled with the liquid, the aseptic condition in the liquid supply piping is maintained by the SIP process performed before the filling with the liquid. If the CIP process is performed in a state where the aseptic condition in the liquid supply piping is maintained, the liquid to be filled can be filled without performing the SIP process.

If the liquid having been filled is removed with a sterilized cleaning liquid or aseptic water, and after the removal of the liquid, the sterilized cleaning liquid or aseptic water is replaced with a sterilized liquid to be filled next while sterilizing the liquid, the liquid to be filled can be changed by performing only the CIP process for the inside of the liquid supply piping, without performing the SIP process.

According to the method described above, the SIP process for the inside of the liquid supply piping need not be performed when changing the liquid to be filled. However, in this method, the time required for the CIP process is still long, and there is a demand for reduction of the time required for the CIP process when changing the liquid. In sterilization of the liquid by the continuous liquid sterilizing apparatus, the residue of the liquid is remarkably deposited at a part where the liquid flowing in the continuous liquid sterilizing apparatus is at high temperature. The preparation time for the liquid changing can be reduced by performing a CIP process that effectively removes the residue of the liquid deposited at such a part.

The present invention has been devised to solve the problem described above, and an object of the present invention is to provide a liquid replacement method for a continuous liquid sterilizing apparatus that can reduce a preparation time before filling of a container with a liquid, improve the availability of an aseptic filling machine and allow efficient production of liquid-filled products.

Solution to Problem

A liquid replacement method for a continuous liquid sterilizing apparatus according to the present disclosure is a liquid replacement method for a continuous liquid sterilizing apparatus that allows a liquid to flow therethrough and sterilizes the liquid by heating the liquid from outside, wherein a first liquid is sterilized by the continuous liquid sterilizing apparatus; an inside of the continuous liquid sterilizing apparatus is cleaned by flowing a cleaning liquid at a flow rate higher than a flow rate of the first liquid while sterilizing the cleaning liquid by the continuous liquid sterilizing apparatus in such a manner that an F value does not become lower than a target F value; and a second liquid is flowed at a flow rate lower than the flow rate of the cleaning liquid while being sterilized by the continuous liquid sterilizing apparatus in such a manner that the F value does not become lower than the target F value.

Furthermore, in the liquid replacement method for a continuous liquid sterilizing apparatus according to the present disclosure, preferably, a temperature corresponding to the higher flow rate at which the F value does not become lower than the target F value is calculated from the higher flow rate, and after a temperature of the continuous liquid sterilizing apparatus is increased to the calculated temperature corresponding to the higher flow rate, the cleaning liquid is flowed at the higher flow rate while being sterilized; and a temperature corresponding to the lower flow rate at which the F value does not become lower than the target F value is calculated from the lower flow rate, and after a flow rate of the continuous liquid sterilizing apparatus is decreased to the lower flow rate, the temperature of the continuous liquid sterilizing apparatus is set at the calculated temperature corresponding to the lower flow rate.

Furthermore, in the liquid replacement method for a continuous liquid sterilizing apparatus according to the present disclosure, preferably, after the first liquid is replaced with the cleaning liquid or while the first liquid is being replaced with the cleaning liquid; the temperature and the flow rate of the continuous liquid sterilizing apparatus are increased in parallel in such a manner that an F value that is a sterilization value of the continuous liquid sterilizing apparatus for the cleaning liquid does not become lower than a target value while calculating the F value; the inside of the continuous liquid sterilizing apparatus is cleaned by flowing the cleaning liquid at a flow rate higher than the flow rate of the first liquid while sterilizing the cleaning liquid by the continuous liquid sterilizing apparatus; the temperature and the flow rate of the continuous liquid sterilizing apparatus are decreased in parallel in such a manner that the F value does not become lower than the target value; and the second liquid is flowed at a flow rate lower than the flow rate of the cleaning liquid while being sterilized by the continuous liquid sterilizing apparatus.

Furthermore, in the liquid replacement method for a continuous liquid sterilizing apparatus according to the present disclosure, preferably, the F value is calculated from a holding duration t (minutes) in a holding portion of the continuous liquid sterilizing apparatus determined from the flow rate of the liquid or the cleaning liquid flowing in the continuous liquid sterilizing apparatus and a temperature T°C of the liquid or the cleaning liquid according to a formula a:

$$F = t \times 10^{(T - T0)/Z} \quad ...\text{Formula a}$$

where T0°C and Z°C are constants determined according to the liquid.

Furthermore, in the liquid replacement method for a continuous liquid sterilizing apparatus according to the present disclosure, preferably, the flow rate is a flow rate of the holding portion, and the temperature is a temperature at an end of the holding portion.

Furthermore, in the liquid replacement method for a continuous liquid sterilizing apparatus according to the present disclosure, preferably, the holding duration is calculated from the higher flow rate of the cleaning liquid, the temperature T°C is calculated from the calculated holding duration and the target value of the F value according to the formula a, and the determined temperature T°C is regarded as the temperature corresponding to the higher flow rate; and the holding duration is calculated from the lower flow rate, the temperature T°C is calculated from the calculated holding duration and the target value of the F value according to the formula a, and the determined temperature T°C is regarded as the temperature corresponding to the lower flow rate.

Furthermore, in the liquid replacement method for a continuous liquid sterilizing apparatus according to the present disclosure, preferably, the cleaning liquid is an alkaline cleaning liquid that contains an alkaline compound.

Furthermore, in the liquid replacement method for a continuous liquid sterilizing apparatus according to the present disclosure, preferably, the cleaning liquid is first water, and after the first liquid is replaced with the first water, the first water is replaced with an alkaline cleaning liquid that contains an alkaline compound.

Furthermore, in the liquid replacement method for a continuous liquid sterilizing apparatus according to the present disclosure, preferably, the cleaning liquid is an alkaline cleaning liquid that contains an alkaline compound, and after the alkaline cleaning liquid is replaced with second water, the second water is replaced with the second liquid.

Advantageous Effects of Invention

According to the present disclosure, in an aseptic filling machine, the inside of a continuous liquid sterilizing apparatus is cleaned in a short time, and the liquid to be filled is changed without sterilization of the inside of liquid supply piping. Therefore, the preparation time before filling of a container with a liquid can be reduced, and the availability and productivity of the aseptic filling machine can be improved.

Brief Description of the Drawings

[FIG. 1] FIG. 1 is a block diagram showing liquid supply piping of an aseptic filling machine according to an embodiment of the present disclosure.
[FIG. 2] FIG. 2 is a block diagram showing the liquid supply piping including a continuous liquid sterilizing apparatus in the aseptic filling machine according to an embodiment of the present disclosure.
[FIG. 3] FIG. 3 is a block diagram showing the liquid supply piping from the continuous liquid sterilizing apparatus to a filler in the aseptic filling machine according to an embodiment of the present disclosure.
[FIG. 4] FIG. 4 is a graph showing temporal transitions of the temperature and the flow rate of liquids and a cleaning liquid in a holding portion of the continuous liquid sterilizing apparatus according to a first embodiment of the present disclosure.
[FIG. 5] FIG. 5 is a graph showing temporal transitions of the temperature and the flow rate of liquids, water and an alkaline cleaning liquid in the holding portion of the continuous liquid sterilizing apparatus according to the first embodiment of the present disclosure.
[FIG. 6] FIG. 6 is a graph showing temporal transitions of the temperature and the flow rate of liquids and a cleaning liquid in the holding portion of the continuous liquid sterilizing apparatus according to a second embodiment of the present disclosure.
[FIG. 7] FIG. 7 is a graph showing temporal transitions of the temperature and the flow rate of liquids, water and an alkaline cleaning liquid in the holding portion of the continuous liquid sterilizing apparatus according to the second embodiment of the present disclosure.
[FIG. 8] FIG. 8 is a diagram showing a heating medium line connected to a second-stage heating portion of the continuous liquid sterilizing apparatus according to an embodiment of the present invention.
[FIG. 9] FIG. 9 is a diagram showing a change of an overall heat transfer coefficient (U value) of the second-stage heating portion of the continuous liquid sterilizing apparatus according to an embodiment of the present invention.

Description of Embodiments

(Continuous liquid sterilizing apparatus and CIP process)

An aseptic filling machine including liquid supply piping including a continuous liquid sterilizing apparatus according to the present disclosure fills a sterilized container with a liquid sterilized by the continuous liquid sterilizing apparatus in an aseptic atmosphere, and seals the container filled with the liquid with a sterilized lid member in the aseptic atmosphere. When the container is a paper container, the container has no lid member, and after the molded container is filled with the liquid, the container is sealed with the material forming the container to finish the product.

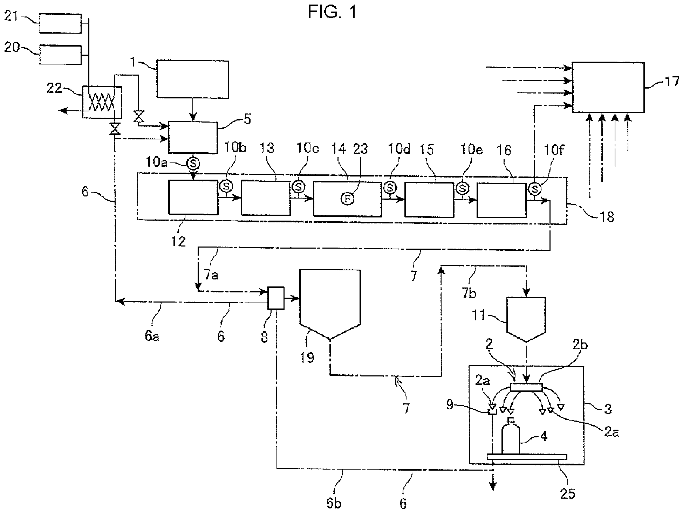

FIG. 1 is a diagram showing liquid supply piping 7 from a continuous liquid sterilizing apparatus 18 to a filler 2 in an aseptic filling machine that fills a container 4 having a bottle shape with a sterilized liquid. As described above, the container is not limited to bottles.
The aseptic filling machine includes a preparation apparatus 1 that prepares the liquid, the continuous liquid sterilizing apparatus 18 that sterilizes the prepared liquid, and the filler 2 that fills the container 4 such as a bottle with the liquid. Components between the preparation apparatus 1 and a filling nozzle 2a in the filler 2 are connected by the liquid supply piping 7. A filling portion including the filler 2 is shielded by a filling portion chamber 3.
The preparation apparatus 1 prepares a liquid such as coffee with milk, black coffee, a green tea drink, tea, tea with milk or a fruit juice drink according to a desired formula. The liquid to be filled into the container may be mixed with solid or fibrous materials.
The aseptic filling machine is provided with a conveyor path for conveying the sterilized container 4 to the filler 2 and ejecting the container 4 filled with a liquid by the filler 2. The conveyor path is typically formed by a large number of wheels and grippers or the like arranged around the wheels for holding containers 4.
The filler 2 includes a large number of filling nozzles 2a arranged around a wheel (not shown) that rotates at high speed in a horizontal plane. The filling nozzles 2a rotate with the wheel, and containers 4 held by the grippers and traveling below the filling nozzles 2a in synchronization with the circumferential speed of the wheel are filled with a fixed amount of liquid from the filling nozzles 2a.

In the filling portion chamber 3 that shields the filling portion provided with the filler 2 of the aseptic filling machine, a cleaning process for cleaning the inside of the filling portion chamber 3 and a sterilization process for sterilizing the inside of the filling portion chamber 3 are performed before production in which the aseptic filling machine fills the containers 4 with a liquid. Aseptic water is required for the cleaning and sterilization processes for the inside of the chamber, for cleaning of sterilized lid members, and for cleaning of the outer surface of mouth portions of the containers filled with the liquid. To produce such aseptic water, the aseptic filling machine may be provided with an aseptic water production apparatus (not shown).

Viewed from the upstream to the downstream of the flow of the liquid along the pipe line from the preparation apparatus 1 to the filler 2, the liquid supply piping 7 of the aseptic filling machine includes a balance tank 5, the continuous liquid sterilizing apparatus 18, a manifold valve 8, an aseptic surge tank 19 and a filler tank 11. The aseptic filling machine also includes an alkaline cleaning liquid supply apparatus 20 that supplies a cleaning liquid to the balance tank 5, a water supply apparatus 21 that supplies water to the balance tank 5, a heat exchanger 22 that performs heat exchange between the cleaning liquid supplied to the balance tank 5 and the ejected liquid, that is, the alkaline cleaning liquid or the mixture of the alkaline cleaning liquid and water, and a controller 17 that controls the operation of the aseptic filling machine.

When the liquid is carbonated to produce a carbonated drink, the liquid supply piping 7 of the aseptic filling machine includes a cooling apparatus, a carbonating apparatus and a carbonated drink surge tank. The cooling apparatus, the carbonating apparatus and the carbonated drink surge tank are provided in the listed order from upstream to downstream between the aseptic surge tank 19 and the filler tank 11, and a carbonated drink manifold value is provided for flowing the carbonated drink through the liquid supply piping 7.

The continuous liquid sterilizing apparatus 18 includes therein a first-stage heating portion 12, a second-stage heating portion 13, a holding tube 14 that forms a holding portion, a first-stage cooling portion 15, and a second-stage cooling portion 16, for example. The liquid as a filler or the cleaning liquid supplied from the balance tank 5 is gradually heated while being fed from the first-stage heating portion 12 to the second-stage heating portion 13 and kept at a predetermined sterilization temperature for a predetermined time in the holding tube 14 for sterilization. After that, the liquid as a filler or the cleaning liquid is fed to the first-stage cooling portion 15 and the second-stage cooling portion 16 and gradually cooled. The number of stages of the heating portions and the cooling portions is increased or decreased as required. A homogenizer may be provided before or after the holding tube 14.

The heating portions heat the outside of the pipe body through which the liquid or cleaning liquid flows with heated steam or hot water heated by heated steam. Any heating portions can be used which heat the outside of the pipe body through which the liquid or cleaning liquid flows. The cooling portions cool the liquid or cleaning liquid from outside by flowing a cooled medium on the outside of the pipe body through which the liquid or cleaning liquid flows. The filler tank 11 is a well-known apparatus, and detailed description thereof will be omitted.

The liquid is prepared in the preparation apparatus 1, fed to the continuous liquid sterilizing apparatus 18 via the balance tank 5, and subjected to a heating and sterilization process in the continuous liquid sterilizing apparatus 18. The liquid subjected to the heating and sterilization process in the continuous liquid sterilizing apparatus 18 is stored in the aseptic surge tank 19 and then fed to the filler tank 11. The liquid in the filler tank 11 is supplied to the filler 2 and charged into the sterilized container 4 through the filling nozzle 2a in the aseptic atmosphere. The container 4 filled with the liquid is sealed with a sterilized lid member and then ejected to the outside of the aseptic filling machine.

The liquid supplied from the balance tank 5 is fed to the first-stage heating portion 12 and the second-stage heating portion 13 of the continuous liquid sterilizing apparatus 18, and the liquid at room temperature is heated to 130°C, for example, in the first-stage heating portion 12 and the second-stage heating portion 13. When there are two stages of heating portions, the first-stage heating portion 12 heats the liquid from room temperature to 80°C, and the second-stage heating portion heats the liquid from 80°C to 130°C.

The liquid heated in the first-stage heating portion 12 and the second-stage heating portion 13 is kept at a target temperature such as 130°C in the holding tube 14. The holding tube 14 is provided with a flowmeter 23 at any position.

The liquid from the holding tube 14 is cooled in the first-stage cooling portion 15 from 130°C to 99°C, for example. The liquid cooled in the first-stage cooling portion 15 is further cooled in the second-stage cooling portion 16 from 99°C to 30°C, for example. The cooled liquid is fed to the aseptic surge tank 19 via the manifold valve 8.

The continuous liquid sterilizing apparatus 18 is provided with temperature sensors 10 at different positions. A temperature sensor 10a is provided on a pipe between the balance tank 5 and the continuous liquid sterilizing apparatus 18. A temperature sensor 10b is provided on a pipe between the first-stage heating portion 12 and the second-stage heating portion 13 in the continuous liquid sterilizing apparatus 18, and a temperature sensor 10c is provided on a pipe between the second-stage heating portion 13 and the holding tube 14. A temperature sensor 10d is provided on a pipe between the holding tube 14 and the first-stage cooling portion 15, a temperature sensor 10e is provided on a pipe between the first-stage cooling portion 15 and the second-stage cooling portion 16, and a temperature sensor 10f is provided at the end of the second-stage cooling portion 16. The temperature sensor 10d is a temperature sensor provided at the end of the holding tube 14. The continuous liquid sterilizing apparatus 18 may be provided with other temperature sensors than the temperature sensors 10 described above.

The liquid sterilization effect is determined by calculating the F value, which is a sterilization value. A target F value is determined according to the type of the liquid, and the continuous liquid sterilizing apparatus 18 has to heat and sterilize the liquid until the F value becomes equal to or higher than the target F value.

The F value is calculated according to the following formula a.

$$F = t \times 10^{(T - T0)/Z} \ldots \text{formula a}$$

(T0°C and Z°C are constants determined according to the liquid)

In the formula, t denotes a duration (in minutes) for which the liquid is held in the holding tube 14. The holding tube 14 is thermally insulated but is not heated. The thermal insulation can be enhanced by using the vacuum insulation. The holding tube 14 is piping that has an inner diameter of $\phi$10 to $\phi$100 mm and a length of 5 to 200 m and has a folded configuration or a spiral configuration. For example, when the inner diameter is $\phi$72.3 mm and the length is 130 m, the holding tube 14 has a holding capacity of 533 L, and the holding duration t is 1.18 minutes provided that the flow rate is 450 L/minute.

T denotes the temperature in °C at the end of the holding tube 14, which is measured by the temperature sensor 10d. Comparing the temperature measured by the temperature sensor 10c provided at the inlet of the holding tube 14 and the temperature measured by the temperature sensor 10d, the temperature measured by the temperature sensor 10d is slightly lower since the holding tube 14 is not heated. Therefore, T is the temperature in °C measured by the temperature sensor 10d that measures the temperature of the end of the holding tube 14.

T0 and Z are constants determined according to the liquid. The expression "determined according to the liquid" means that T0 and Z vary with the liquid since the bacteria to be killed depend on the pH of the liquid. For example, for a liquid having a pH equal to or higher than 4.6, a sterilization effect enough to kill botulinus bacillus is required, so that T0 is 121.1°C, and Z is 10°C. For a liquid having a pH equal to or higher than 4.0 and lower than 4.6, some bacteria develop, so that T0 is 85°C, and Z is 7.8°C. For a liquid having a pH lower than 4.0, no bacteria develop, and a sterilization effect enough to kill mold and yeast is required, so that T0 is 65°C, and Z is 5°C. The different values of T0 and Z shown for different values of pH are examples, and T0 and Z may assume other values. The target F value to be calculated is determined according to the liquid or the specific composition of the liquid, for example.

The liquid sterilized by the continuous liquid sterilizing apparatus 18 is fed to and stored in the aseptic surge tank 19. The stored liquid is fed from the aseptic surge tank 19 to the filler tank 11 and stored in the filler tank 11. The liquid is fed from the filler tank 11 to the filler 2, and the sterilized container 4 is filled with a fixed amount of the liquid from the filling nozzle 2a in the aseptic atmosphere in the filling portion chamber 3. The container 4 filled with the liquid is sealed with a sterilized lid member and ejected from the aseptic filling machine.

When changing the liquid to be filled to another liquid after the aseptic filling operation with the liquid ends, a CIP (cleaning in place) process and an SIP (sterilizing in place) process for the inside of the liquid supply piping 7 are performed. The part in which the residue of the liquid is most likely to be deposited in the liquid filling operation is the second-stage heating portion 13. The second-stage heating portion 13 is a part in which the fluid is at high temperature, so that the deposition of the residue is particularly likely to be caused by heat denaturation of protein, and the deposition is particularly remarkable when the liquid contains milk. The higher the temperature or the higher the flow rate of the fed liquid, the larger the amount of minerals deriving from the ingredients of the product. The residue of the liquid used in the previous filling is removed by the CIP process.

The CIP process for the inside of the liquid supply piping 7 is performed by circulating a cleaning liquid supplied from the alkaline cleaning liquid supply apparatus 20 or the water supply apparatus 21 to the balance tank 5 in the liquid supply piping 7. To circulate the cleaning liquid, as shown in FIG. 1, the liquid supply piping 7 is provided with a feedback path 6 to form a circulation path. An upstream piping portion 7a extending from the balance tank 5 to the manifold valve 8 via the continuous liquid sterilizing apparatus 18 may be provided with an upstream feedback path 6a to form an upstream circulation path.

The cleaning liquid may not be circulated in the upstream circulation path but may be flowed from the manifold valve 8 to the filler 2 via the filler tank 11, and a filler manifold 2b of the filler 2 may distribute the cleaning liquid to the filling nozzles 2a. The cleaning liquid flowing out from the filling nozzles 2a is received by cups 9 connected to the tip ends of the filling nozzles 2a. The cleaning liquid flowing out of the large number of filling nozzles 2a is collected by a circulation manifold 25 and fed back to the manifold valve 8 through a downstream feedback path 6b. The cleaning liquid may circulate in the liquid supply piping 7 by passing through the manifold valve 8 and the upstream feedback path 6a.

The cups 9, each of which can be connected to and disconnected from the opening of a filling nozzle 2a, are arranged at openings of the filling nozzles 2a of the filler 2. When performing the CIP process, an actuator (not shown) couples each cup 9 to an opening portion at the tip end of a filling nozzle 2a of the filler 2. In this way, each cup 9, which forms the starting end of the downstream feedback path 6b, is connected to the opening of a filling nozzle 2a.

The cleaning liquid is a liquid for cleaning the inside of the liquid supply piping 7 and is an alkaline cleaning liquid containing an alkaline compound or an acidic cleaning liquid containing an acidic compound that effectively removes the residue of the liquid. The cleaning liquid may be water used to remove the liquid from the liquid supply piping or remove the alkaline cleaning liquid or acidic cleaning liquid from the liquid supply piping 7. Although FIG. 1 shows the alkaline cleaning liquid supply apparatus 20 and the water supply apparatus 21 as apparatuses that supply the cleaning liquid to the balance tank 5, an acidic cleaning liquid supply apparatus may also be provided.

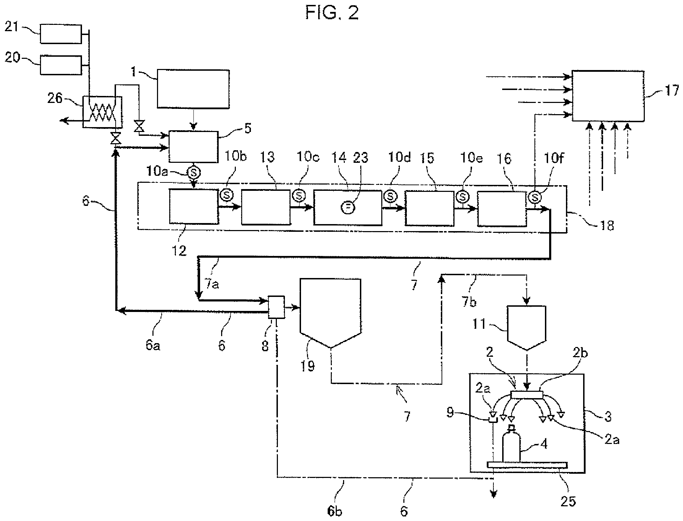

As shown by the thick line in FIG. 2, the cleaning liquid supplied from the alkaline cleaning liquid supply apparatus 20 or the water supply apparatus 21 to the balance tank 5 flows from the balance tank 5 to the continuous liquid sterilizing apparatus **18.** The cleaning liquid is sterilized by being heated by the continuous liquid sterilizing apparatus 18 and may be circulated by flowing to the manifold valve 8, passing through the upstream feedback path 6a and returning to the balance tank 5. The circulation occurs in the upstream circulation path formed by the balance tank 5, the continuous liquid sterilizing apparatus 18, the manifold valve 8 and the upstream feedback path 6a in this order.

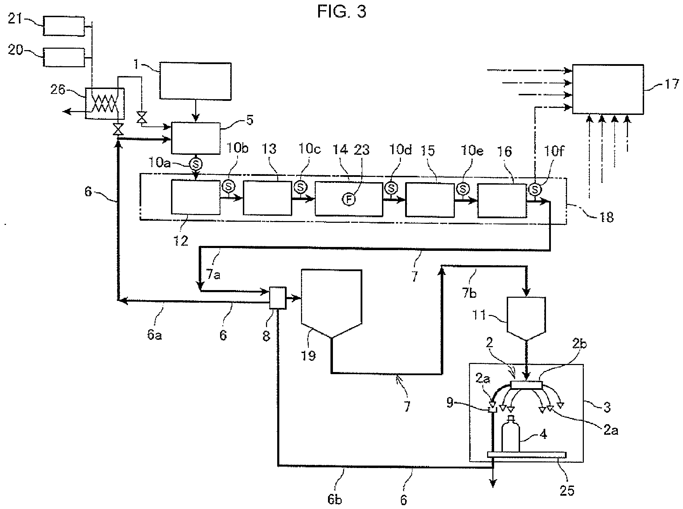

As shown by the thick line in FIG. 3, the cleaning liquid supplied from the alkaline cleaning liquid supply apparatus 20 or the water supply apparatus 21 to the balance tank 5 flows from the balance tank 5 to the continuous liquid sterilizing apparatus **18.** The cleaning liquid is sterilized by being heated by the continuous liquid sterilizing apparatus 18, flows through the manifold valve 8, the aseptic surge tank 19 and the filler tank 11 to reach the filler 2 and then flows to the filling nozzles 2a through the filler manifold 2b. The cleaning liquid from the filling nozzles 2a may circulate in the liquid supply piping 7 by being received by the cups 9, collected by the circulation manifold 25, passing through the downstream feedback path 6b and then flowing through the manifold valve 8 and the upstream feedback path 6a to return to the balance tank 5. The feedback path of the liquid supply piping 7 is formed by the balance tank 5, the continuous liquid sterilizing apparatus 18, the manifold valve 8, the aseptic surge tank 19, the filler tank 11, the filler manifold 2b, the filling nozzles 2a, the cups 9, the circulation manifold 25, the downstream feedback path 6b, the manifold valve 8 and the upstream feedback path 6a in this order.

The alkaline cleaning liquid contains water and an alkaline compound that is a mixture of sodium hydroxide, potassium hydroxide, sodium carbonate, sodium silicate, sodium phosphate, sodium hypochlorite, surfactant, a chelating agent such as sodium gluconate and ethylenediamine tetraacetic acid and the like as an additive. The water can be any water containing no foreign matters, such as ion exchanged water, distilled water or tap water.

The alkaline cleaning liquid may contain lithium carbonate, ammonium carbonate, magnesium carbonate, calcium carbonate, propylene carbonate or a mixture thereof, although the alkaline cleaning liquid is not limited to these. The alkaline cleaning liquid may also contain a bicarbonate such as sodium bicarbonate, potassium bicarbonate, lithium bicarbonate, ammonium bicarbonate, magnesium bicarbonate or calcium bicarbonate, a sesquicarbonate such as a sodium sesquicarbonate, potassium sesquicarbonate or lithium sesquicarbonate, or a mixture thereof.

Although the alkaline cleaning liquid is effective for cleaning of the inside of the liquid supply piping 7, an acidic cleaning liquid containing an acidic compound can also be used. When using the acidic cleaning liquid, an acidic cleaning supply apparatus is provided. The acidic cleaning liquid contains a nitric acid-based acidic chemical agent or a phosphoric acid-based acidic chemical agent as an additive. Besides the nitric acid-based acidic chemical agent and the phosphoric acid-based acidic chemical agent, the acidic cleaning liquid may contain hydrochloric acid, sulfuric acid, acetic acid, citric acid, lactic acid, formic acid, glycolic acid, methanesulfonic acid, sulfamic acid, or a mixture thereof, although the additive is not limited to these.

The cleaning liquid may contain various bleaching agents such as hypochlorite, hydrogen peroxide, peracetic acid, peroctanoic acid, persulfate, perborate, hydrosulfite or thiourea dioxide, or percarbonate, for example. Furthermore, the cleaning liquid may contain a water softener such as aluminosilicate or polycarboxylate, or may contain an anti-redeposition agent such as sodium phosphate, sodium polyacrylate or sodium carboxylate. Furthermore, an enzyme, a solvent, fatty acid, a foam modifier or an active enzyme source may be added to the cleaning liquid, for example.

As cleaning liquids used in the CIP process, an alkaline cleaning liquid can be flowed first, and then an acidic cleaning liquid can be flowed, although the order of flowing cleaning liquids is not limited to this order. For example, an acidic cleaning liquid may be flowed first, and then an alkaline cleaning liquid may be flowed, or an acidic cleaning liquid and an alkaline cleaning liquid may be alternately flowed multiple times. Alternatively, only one of an acidic cleaning liquid and an alkaline cleaning liquid may be flowed for the CIP process.

When an operation button on a panel (not shown) of the controller 17 is operated, the CIP process for the liquid supply piping 7 is performed in a predetermined procedure. A fixed amount of alkaline cleaning liquid is constantly or intermittently supplied from the alkaline cleaning liquid supply apparatus 20, and the residue of the previous liquid deposited on the inside of the liquid supply piping 7 is removed by circulating the alkaline cleaning liquid. In addition, water is supplied from the water supply apparatus 21. The liquid is replaced with water, and then the water is replaced with the alkaline cleaning liquid. After removing the residue of the previous liquid deposited on the inside of the liquid supply piping 7 with the alkaline cleaning liquid, the alkaline cleaning liquid is replaced with water.

As described above, when changing the liquid to be filled to another liquid after the aseptic filling operation with the liquid ends, the CIP process for the inside of the liquid supply piping 7 is performed. Typically, the SIP process for the inside of the liquid supply piping 7 is performed after the CIP process is performed. However, the SIP process is not performed in the embodiment of the present disclosure.

When the container 4 is filled with a first liquid while the first liquid is being sterilized by the continuous liquid sterilizing apparatus 18 and then the first liquid is replaced with a second liquid, if the replacement can be achieved while maintaining the aseptic condition of the inside of the liquid supply piping 7, the SIP process for the inside of the liquid supply piping 7 is not needed.

When the container 4 is filled with the first liquid while the first liquid is being sterilized by the continuous liquid sterilizing apparatus 18, the residue of the first liquid is deposited on the inside of the liquid supply piping 7. More of the residue of the liquid tends to remain in the continuous liquid sterilizing apparatus **18.** The deposition of the residue of the first liquid is particularly remarkable in the second-stage heating portion 13 in which the first liquid is heated to higher temperature.

If the aseptic condition of the inside of the liquid supply piping 7 can be maintained, the SIP process does not have to be performed. However, the CIP process for the inside of the liquid supply piping 7 in which the residue of the first liquid is deposited has to be performed.

After the filling with the first liquid is completed, while leaving the sterilization conditions of the continuous liquid sterilizing apparatus 18 for the first liquid unchanged, the cleaning liquid is supplied from the alkaline cleaning liquid supply apparatus 20 to the balance tank 5, the cleaning liquid supplied to the balance tank 5 is sterilized by the continuous liquid sterilizing apparatus 18, and the CIP process for the inside of the liquid supply piping 7 is performed with the sterilized cleaning liquid. After the CIP process ends, while leaving the sterilization conditions of the continuous liquid sterilizing apparatus 18 unchanged, the cleaning liquid is replaced with the second liquid. After the cleaning liquid is removed by the second liquid, the filling with the second liquid is started. As described above, by replacing the first liquid with the cleaning liquid and further replacing the cleaning liquid with the second liquid while maintaining the sterilization conditions of the continuous liquid sterilizing apparatus 18 for the first liquid, the liquid to be filled into the container can be changed from the first liquid to the second liquid without performing the SIP process.

The method described above requires a long time for the CIP process. In order to reduce the duration of the CIP process, the flow rate of the cleaning liquid needs to be increased when performing the CIP process. By increasing the flow rate of the cleaning liquid, the residue of the first liquid deposited on the inside of the liquid supply piping 7 can be removed in a shorter time. Increasing the flow rate of the cleaning liquid flowed means increasing the flow speed of the cleaning liquid, and the increased flow speed of the cleaning liquid produces an increased physical peeling force and improves the cleaning effect.

(First embodiment)

The liquid to be sterilized by the continuous liquid sterilizing apparatus 18 is changed from the first liquid to the second liquid in the method described below.

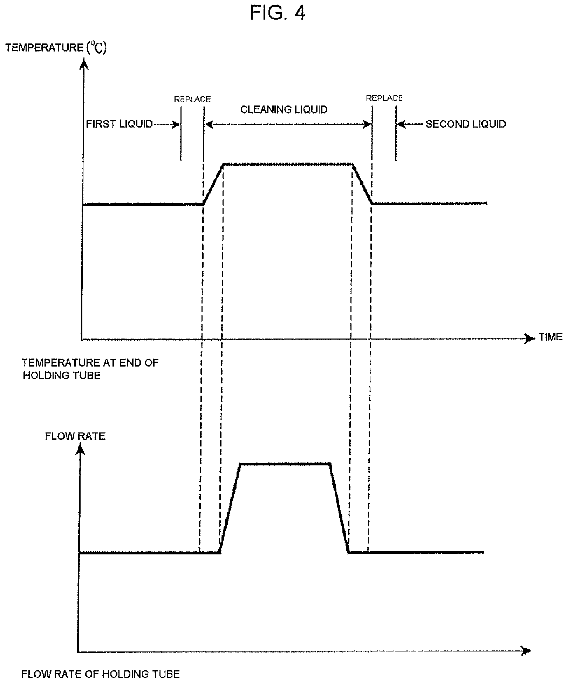

FIG. 4 shows a temporal change of the flow rate measured by the flowmeter 23 provided on the holding tube 14 and a temporal change of the temperature measured by the temperature sensor 10d provided at the end of the holding tube 14 when changing the liquid to be sterilized by the continuous liquid sterilizing apparatus 18 from the first liquid to the second liquid.

By flowing the first liquid at a predetermined temperature and a predetermined flow rate, the first liquid is sterilized by the continuous liquid sterilizing apparatus 18 and charged into the container 4. The F value is calculated from the temperature T°C measured by the temperature sensor 10d at the end of the holding tube 14 and the holding duration t (minutes) of the liquid in the holding tube 14 calculated from the flow rate in the holding tube 14. The first liquid is sterilized by setting the F value to be equal to or higher than the target value. The sterilized first liquid is cooled by the first-stage cooling portion 15 and the second-stage cooling portion 16 and then charged into the container 4.

After the filling with the first liquid is completed, the cleaning liquid is supplied to the balance tank 5 from the alkaline cleaning liquid supply apparatus 20 or the water supply apparatus 21. The supplied cleaning liquid is flowed through the continuous liquid sterilizing apparatus 18 with the temperature and the flow rate of the holding tube 14 that are sterilization conditions for the first liquid left unchanged, thereby replacing the first liquid with the cleaning liquid while sterilizing the cleaning liquid. The cleaning liquid as a replacement is sterilized by the continuous liquid sterilizing apparatus 18 under the same conditions as those for the first liquid. A mixture of the first liquid and the cleaning liquid is ejected from the aseptic filling machine until the first liquid in the liquid supply piping 7 is completely replaced with the cleaning liquid. It is checked that the first liquid in the liquid supply piping 7 is completely replaced with the cleaning liquid. The check is conducted by measuring the electric conductivity, pH or the like of the ejected mixture.

When flowing the cleaning liquid through the continuous liquid sterilizing apparatus 18 after the filling with the first liquid is completed, cooling by the first-stage cooling portion 15 and the second-stage cooling portion 16 may be stopped, or the cooling conditions may be relaxed. That is, the cleaning liquid does not have to be cooled to room temperature. When ejecting the mixture of the first liquid and the cleaning liquid, the temperature of the supplied cleaning liquid can be increased from room temperature through the heat exchange between the mixture and the supplied cleaning liquid in the heat exchanger 26, so that the energy for heating the cleaning liquid in the continuous liquid sterilizing apparatus 18 can be reduced.

The CIP process for the inside of the liquid supply piping 7 is performed with the cleaning liquid that has replaced the first liquid. In this process, to reduce the duration of the CIP process, the flow rate of the cleaning liquid is increased to flow the cleaning liquid from the continuous liquid sterilizing apparatus 18 to the inside of the liquid supply piping 7 at a flow rate higher than the flow rate of the first liquid. By increasing the flow rate, the holding duration t (minutes) in the holding tube 14 decreases. If only the flow rate is increased while leaving the temperature unchanged, the calculated F value decreases and becomes lower than the target F value, and the cleaning liquid is poorly sterilized. In order to keep the calculated F value equal to or higher than the target value provided that the holding duration is t minutes, not only the flow rate but also the temperature T°C have to be increased so that the F value does not become lower than the target value.

The flow rate of the cleaning liquid used for the CIP process that is higher than the flow rate of the first liquid is determined, and the set temperature and the set flow rate of the continuous liquid sterilizing apparatus 18 are increased while calculating the F value, which is a sterilization value of the continuous liquid sterilizing apparatus 18 for the cleaning liquid, in such a manner that the F value does not become lower than the target value. By flowing the cleaning liquid at a flow rate higher than the predetermined flow rate of the first liquid while sterilizing the cleaning liquid in the continuous liquid sterilizing apparatus 18, the inside of the continuous liquid sterilizing apparatus 18 is cleaned.

As describe above, the flow rate of the cleaning liquid used for the CIP process that is higher than the flow rate of the first liquid is determined, the holding duration t (minutes) in the holding tube 14 is calculated based on the higher flow rate, and the temperature T°C is calculated from the calculated holding duration t (minutes) and the target value of the F value according to the formula a. The higher flow rate is appropriately 1.1 times or more and 5 times or less the flow rate of the first liquid. If the flow rate is less than 1.1 times the flow rate of the first liquid, the cleaning effect of the CIP process is not improved, and the duration of the CIP process cannot be sufficiently reduced. If the flow rate is more than 5 times the flow rate of the first liquid, a high-capacity pump is required, and the facility cost increases. The flow rate is preferably 1.3 times or more and 3 times or less the flow rate of the first liquid.

As shown in FIG. 4, after the first liquid is replaced with the cleaning liquid, the temperature setting of the heating portions in the continuous liquid sterilizing apparatus 18 is changed while leaving the flow rate unchanged so that the temperature measured by the temperature sensor 10d at the end of the holding tube 14 is increased to the calculated temperature T°C described above. After it is checked that the temperature measured by the temperature sensor 10d has been increased to the calculated temperature or higher, the flow rate is changed to the higher flow rate. The temperature may be increased while replacing the first liquid with the cleaning liquid, and then the flow rate may be increased.

If the flow rate of the cleaning liquid is increased when the temperature of the cleaning liquid does not rise to the calculated temperature T°C or higher, as can be seen from the formula a, the holding duration t (minutes) may increase before the calculated temperature T°C is reached, and the F value may become lower than the target value. Thus, the cleaning liquid may be poorly sterilized, and the liquid supply piping 7 may be contaminated with bacteria. To avoid this, the procedure of increasing the flow rate after increasing the temperature has to be complied with. By complying with the procedure described above, the liquid can be replaced while maintaining the aseptic condition of the inside of the liquid supply piping 7.

By setting the temperature to be equal to or higher than the calculated temperature and setting the determined higher flow rate, the cleaning liquid is sterilized by the continuous liquid sterilizing apparatus 18 with an F value equal to or higher than the target F value.

After the first liquid is replaced with the cleaning liquid, in order that the F value does not become lower than the target F value, the temperature and the flow rate of the continuous liquid sterilizing apparatus 18 that sterilizes the cleaning liquid are set to be equal to or higher than the calculated temperature and the higher flow rate, respectively, and a circulation path is configured to circulate the sterilized cleaning liquid. The circulation path may be the upstream circulation path that extends from the upstream piping portion 7a to the upstream feedback path 6a via the manifold valve 8 as shown in FIG. 2. The part downstream of the manifold valve 8 may be filled with the sterilized cleaning liquid, and the CIP process for the downstream circulation path may be performed by circulating the sterilized cleaning liquid through the downstream circulation path formed by the downstream piping portion 7b and the downstream feedback path 6b. A heating apparatus may be provided on the downstream piping portion 7b or the downstream feedback path 6b to heat the circulated cleaning liquid.

As shown in FIG. 3, the cleaning liquid may be flowed through the upstream piping portion 7a, the downstream piping portion 7b, the downstream feedback path 6b and the upstream feedback path 6a, that is, a circulation path from the continuous liquid sterilizing apparatus 18 to the filling nozzles 2a may be formed, and the CIP process may be performed by circulating the cleaning liquid through the circulation path.

The cleaning liquid may be an alkaline cleaning liquid, an acidic cleaning liquid or water. Water may be used first and then replaced with an alkaline cleaning liquid or an acidic cleaning liquid. Alternatively, an alkaline cleaning liquid or an acidic cleaning liquid may be replaced with water. An alkaline cleaning liquid and an acidic cleaning liquid may be used in sequence. The alkaline cleaning liquid has the highest cleaning effect, and using an alkaline cleaning liquid is preferably mandatory. The first liquid may be replaced with an alkaline cleaning liquid, and the alkaline cleaning liquid may be replaced with the second liquid.

The CIP process is performed by circulating, through the configured circulation path, the cleaning liquid sterilized to have an F value equal to or higher than the target F value under the sterilization conditions of the continuous liquid sterilizing apparatus 18, that is, the increased temperature and the higher flow rate. The cleaning liquid held in the holding tube 14 may be flowed to downstream without being cooled by the first-stage cooling portion 15 and the second-stage cooling portion 16. The cleaning liquid heated for sterilization has an improved cleaning effect. Alternatively, the cleaning liquid to be flowed may be appropriately cooled to a temperature equal to or higher than 60°C and equal to or lower than 95°C, which is a temperature that is equal to or lower than the boiling point of water and has a higher cleaning effect. Alternatively, the cleaning liquid to be flowed may be cooled to room temperature.

The CIP process is performed for a predetermined duration. The predetermined duration can be a duration empirically determined from the kind of the first liquid, the total flow rate of the first liquid flowed for filling, the sterilization temperature and the like. The predetermined duration of the CIP process may be determined by calculating the overall heat transfer coefficient of the second-stage heating portion 13 of the continuous liquid sterilizing apparatus 18 as described later.

The controller 17 determines that the CIP process is completed when the calculated overall heat transfer coefficient reaches a predetermined target value.

As shown in FIG. 4, although the CIP process continues while the cleaning liquid is flowing, the CIP process is determined to be completed when the CIP process has been performed for a predetermined duration, and the flow rate of the cleaning liquid is first decreased. The decreased flow rate is determined according to the sterilization conditions for sterilization of the second liquid to be filled next by the continuous liquid sterilizing apparatus **18.** The flow rate is lower than the flow rate of the cleaning liquid. It is checked with the flowmeter 23 that the flow rate of the cleaning liquid has been decreased to the flow rate determined according to the sterilization conditions for the second liquid. After it is checked that the flow rate has been decreased, the sterilization temperature of the continuous liquid sterilizing apparatus 18 is decreased to the sterilization temperature for the second liquid. The F value determined from the holding duration t (minutes) in the holding tube 14 determined from the decreased flow rate and the sterilization temperature T°C for the second liquid is equal to or higher than the target value.

After it is checked that the temperature of the cleaning liquid measured by the temperature sensor 10d has been decreased to the sterilization temperature for the second liquid, the cleaning liquid is replaced with the second liquid. The temperature and the flow rate may be decreased while replacing the cleaning liquid with the second liquid.

The sterilization conditions for the second liquid have to be equivalent to or looser than the sterilization conditions for the first liquid. When the pH of the first liquid is equal to or higher than 4.6, the pH of the second liquid can be any value. However, when the pH of the first liquid is equal to or higher than 4.0 and lower than 4.6, the pH of the second liquid must not be equal to or higher than 4.6. This is because when bacteria that survive under the sterilization conditions for the first liquid remain in the liquid supply piping 7, the bacteria remaining in the liquid supply piping 7 cannot be killed by sterilizing the second liquid under sterilization conditions for a pH equal to or higher than 4.6.

If the temperature of the cleaning liquid is decreased while the flow rate of the cleaning liquid that is higher than that of the first liquid does not reach the flow rate of the second liquid that is lower than the flow rate of the cleaning liquid, that is, while the holding duration t (minutes) remains small, the target F value is not reached as can be seen from the formula a. In this case, the cleaning liquid is poorly sterilized, and the liquid supply piping 7 is contaminated with bacteria. To avoid this, the procedure of decreasing the temperature after decreasing the flow rate has to be complied with. By complying with the procedure described above, the liquid can be replaced while maintaining the aseptic condition of the inside of the liquid supply piping 7.

After the cleaning liquid in the liquid supply piping 7 is removed with the second liquid, it is checked that the cleaning liquid has been replaced with the second liquid, and then filling with the second liquid is started. By replacing the first liquid with the cleaning liquid and replacing the cleaning liquid with the second liquid while sterilizing the first liquid, the cleaning liquid and the second liquid in the continuous liquid sterilizing apparatus 18 by keeping the sterilization value equal to or higher than the target F value, the liquids to be filled can be changed by performing only the CIP process, without performing the SIP process. By increasing the flow rate of the cleaning liquid, the liquids can be changed by reducing the duration of the CIP process.

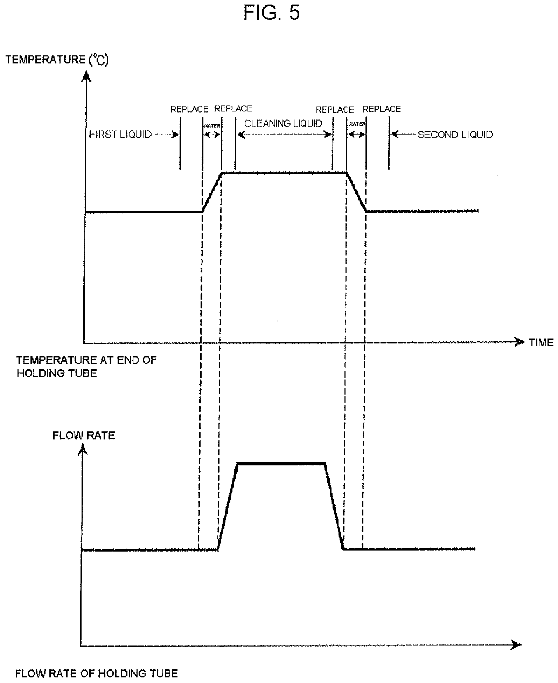

A method of replacing the first liquid with the second liquid by replacing the first liquid with the cleaning liquid and replacing the cleaning liquid as a replacement with the second liquid has been describe above. Hereinafter, a method of replacing of the first liquid with the second liquid by replacing the first liquid with first water as a cleaning liquid, replacing the first water as a replacement with an alkaline cleaning liquid, replacing the alkaline cleaning liquid as a replacement with second water and replacing the second water as a replacement with the second liquid as shown in FIG. 5 will be described. In this case, as a cleaning liquid, water is first used, and then an alkaline cleaning liquid is used. After the alkaline cleaning liquid as a cleaning liquid is replaced with the second water as a cleaning liquid, the second water is replaced with the second liquid.

After the first liquid is replaced with the first water, and the first water as a replacement is replaced with the alkaline cleaning liquid, the alkaline cleaning liquid may be directly replaced with the second liquid without being replaced with the second water. The first liquid may be replaced with the alkaline cleaning liquid, the alkaline cleaning liquid as a replacement may be replaced with the second water, and the second water may be replaced with the second liquid.

When the first liquid is replaced with the alkaline cleaning liquid, the alkaline cleaning liquid, which has a cleaning effect, is wasted until the first liquid is removed. By replacing the first liquid with the first water, the possibility that the CIP process is performed in a state where the first liquid is mixed in the alkaline cleaning liquid is eliminated.

By replacing the alkaline cleaning liquid with the second water and then replacing the second water with the second liquid, the alkaline cleaning liquid can be prevented from being mixed in the second liquid. The second liquid preferably replaces the second water in order to prevent the alkaline cleaning liquid from being mixed in the second liquid.

By flowing the first liquid at a predetermined temperature and a predetermined flow rate, the first liquid is sterilized by the continuous liquid sterilizing apparatus 18 and filled into the container 4. The F value is calculated from the temperature T°C measured by the temperature sensor 10d at the end of the holding tube 14 and the holding duration t (minutes) of the first liquid in the holding tube 14 calculated from the flow rate in the holding tube **14.** The first liquid is sterilized by setting the calculated F value to be equal to or higher than the target value. The sterilized first liquid is cooled by the first-stage cooling portion 15 and the second-stage cooling portion 16 and then filled into the container 4.

After the filling with the first liquid is completed, water is supplied to the balance tank 5 from the water supply apparatus 21, and the first liquid is replaced with the first water while leaving the temperature and the flow rate that are sterilization conditions of the continuous liquid sterilizing apparatus 18 for the first liquid unchanged. The supplied first water is sterilized by the continuous liquid sterilizing apparatus 18 under the same conditions as those for the first liquid. A mixture of the first liquid and the first water is ejected from the aseptic filling machine until the first liquid in the liquid supply piping 7 is completely replaced with the first water. It is checked that the first liquid in the liquid supply piping 7 is completely replaced with the first water. The check is conducted by measuring the electric conductivity of the ejected mixture.

After the filling with the first liquid is completed, the first water is supplied to the continuous liquid sterilizing apparatus 18 and heated and sterilized. In this process, cooling by the first-stage cooling portion 15 and the second-stage cooling portion 16 may be stopped, or the cooling conditions may be relaxed. That is, the first water may not be cooled to room temperature. When ejecting the mixture of the first liquid and the first water, the temperature of the first water supplied to the balance tank 5 can be increased from room temperature through the heat exchange between the mixture and the supplied first water in the heat exchanger 26, so that the energy for heating the first water in the continuous liquid sterilizing apparatus 18 can be reduced.

After the first liquid in the liquid supply piping 7 is replaced with the first water, the first water is replaced with the alkaline cleaning liquid. The CIP process for the inside of the liquid supply piping 7 is performed with the alkaline cleaning liquid that has replaced the first water. After the CIP process is completed, the alkaline cleaning liquid is replaced with the second water, and the second water is then replaced with the second liquid. By replacing the first liquid supplied to the continuous liquid sterilizing apparatus 18 with the second liquid in this way, the liquid to be filled into the container 4 can be changed from the first liquid to the second liquid without performing the SIP process for the inside of the liquid supply piping 7.

When performing the CIP process for the inside of the liquid supply piping 7 with the alkaline cleaning liquid, to reduce the duration of the CIP process, the flow rate of the alkaline cleaning liquid is increased to flow the alkaline cleaning liquid from the continuous liquid sterilizing apparatus 18 to the inside of the liquid supply piping 7 at a flow rate higher than the flow rate of the first liquid. By increasing the flow rate, the holding duration t (minutes) in the holding tube 14 decreases. As a result, the calculated F value decreases, and the alkaline cleaning liquid at the higher flow rate is poorly sterilized. In order to keep the F value equal to or higher than the target value provided that the holding duration is t minutes, the temperature T°C has to be increased.

The flow rate of the alkaline cleaning liquid used for the CIP process that is higher than the flow rate of the first liquid is determined, the holding duration t (minutes) in the holding tube 14 is calculated from the higher flow rate, and the temperature T° is calculated according to the formula a from the calculated holding duration t (minutes) and the target F value. The higher flow rate is appropriately 1.1 times or more and 5 times or less the flow rate of the first liquid. If the flow rate is less than 1.1 times the flow rate of the first liquid, the cleaning effect of the CIP process is not improved, and the duration of the CIP process cannot be sufficiently reduced. If the flow rate is more than 5 times the flow rate of the first liquid, a high-capacity pump is required, and the facility cost increases.

As shown in FIG. 5, the first liquid in the liquid supply piping 7 is replaced with the first water without changing the sterilization conditions of the continuous liquid sterilizing apparatus 18. The method of replacing the first liquid with the first water is the same as the method of replacing the first liquid with the cleaning liquid described above. After the first liquid is replaced with the first water, the temperature setting of the heating portions in the continuous liquid sterilizing apparatus 18 is changed while leaving the flow rate unchanged so that the temperature measured by the temperature sensor 10d at the end of the holding tube 14 is increased to the calculated temperature T°C.

It is checked that the temperature measured by the temperature sensor 10d has been increased to the calculated temperature T°C or higher, and then, the flow rate is changed to the higher flow rate while replacing the first water with the alkaline cleaning liquid. The first water may be replaced with the alkaline cleaning liquid after the flow rate of the first water is changed to the higher flow rate.

If the flow rate of the first water or the alkaline cleaning liquid supplied is increased when the temperature of the first water or the alkaline cleaning liquid does not rise to the calculated temperature or higher, as can be seen from the formula a, the holding duration t (minutes) decreases before the calculated temperature T°C is reached, and the target F value is not reached. Thus, the first water or the alkaline cleaning liquid is poorly sterilized, and the liquid supply piping 7 is contaminated with bacteria. To avoid this, the procedure of increasing the flow rate after increasing the temperature has to be complied with. By complying with the procedure described above, the liquid can be replaced while maintaining the aseptic condition of the inside of the liquid supply piping 7.

By setting the calculated temperature and the determined flow rate, the first water or the alkaline cleaning liquid is sterilized by the continuous liquid sterilizing apparatus 18 with an F value equal to or higher than the target F value.

After the first water is replaced with the alkaline cleaning liquid, a circulation path for the sterilized alkaline cleaning liquid flowing at the higher flow rate is configured. The circulation path may be the upstream circulation path that extends from the upstream piping portion 7a to the upstream feedback path 6a via the manifold valve 8 as shown in FIG. 2. The part downstream of the manifold valve 8 may be filled with the sterilized cleaning liquid, and the CIP process for the downstream circulation path may be performed by circulating the sterilized alkaline cleaning liquid through the downstream circulation path formed by the downstream piping portion 7b and the downstream feedback path 6b. A heating apparatus may be provided on the downstream piping portion 7b or the downstream feedback path 6b to heat the circulated alkaline cleaning liquid, thereby improving the cleaning effect.

The CIP process is performed by circulating, through the configured circulation path, the alkaline cleaning liquid sterilized to have an F value equal to or higher than the target F value under the sterilization conditions including the temperature increased by the continuous liquid sterilizing apparatus 18 and the higher flow rate. The alkaline cleaning liquid held at high temperature in the holding tube 14 may be flowed to downstream without being cooled by the first-stage cooling portion 15 and the second-stage cooling portion 16. The alkaline cleaning liquid heated for sterilization has a higher cleaning effect. Alternatively, the alkaline cleaning liquid to be flowed may be appropriately cooled to a temperature equal to or higher than 60°C and equal to or lower than 95°C, which is a temperature that is equal to or lower than the boiling point of water and has a higher cleaning effect. Alternatively, the alkaline cleaning liquid to be flowed may be cooled to room temperature.

The CIP process is performed for a predetermined duration. The predetermined duration can be a duration empirically determined from the kind of the first liquid, the total flow rate of the first liquid flowed for filling, the sterilization temperature and the like. The predetermined duration may be determined by calculating the overall heat transfer coefficient of the second-stage heating portion 13 of the continuous liquid sterilizing apparatus 18 as described above.

As shown in FIG. 5, after the cleaning with the alkaline cleaning liquid is performed for the predetermined duration, the alkaline cleaning liquid is replaced with the second water. The CIP process continues while the cleaning liquid is flowing. As with the first water, the second water is supplied from the water supply apparatus 21 to the balance tank 5, and the supplied second water is sterilized by the continuous liquid sterilizing apparatus 18.

After the cleaning with the alkaline cleaning liquid, the flow rate is decreased to a lower flow rate while flowing the second water that is flowed instead of the alkaline cleaning liquid. The lower flow rate is determined according to the sterilization conditions for sterilization of the second liquid to be filled next by the continuous liquid sterilizing apparatus 18. The flow rate of the second liquid is lower than the flow rate of the alkaline cleaning liquid. It is checked with the flowmeter 23 that the flow rate of the second water has been decreased to the flow rate determined according to the sterilization conditions for the second liquid. After it is checked that the flow rate of the second water has been decreased, the sterilization temperature of the continuous liquid sterilizing apparatus 18 is decreased to the sterilization temperature for the second liquid. The F value determined from the holding duration t (minutes) in the holding tube 14 determined from the lower flow rate and the sterilization temperature T°C for the second liquid is equal to or higher than the target value.

It is checked that the temperature of the second water measured by the temperature sensor 10d has been decreased to the sterilization temperature for the second liquid. After it is checked that the temperature of the second water has been decreased to the sterilization temperature for the second liquid, the second water is replaced with the second liquid.

When decreasing the flow rate while replacing the cleaning liquid with the second water, it is checked with the flowmeter 23 that the flow rate of the second water has been decreased to the flow rate determined according to the sterilization conditions for the second liquid. After it is checked that the flow rate has been decreased, the sterilization temperature of the continuous liquid sterilizing apparatus 18 is decreased to the sterilization temperature for the second liquid. The F value determined from the holding duration t (minutes) in the holding tube 14 determined from the lower flow rate and the sterilization temperature T°C for the second liquid is equal to or higher than the target value. The alkaline cleaning liquid may be replaced with the second water after the flow rate of the alkaline cleaning liquid is decreased.

The sterilization conditions for the second liquid have to be equivalent to or looser than the sterilization conditions for the first liquid, as described above.

If the temperature of the alkaline cleaning liquid or the second water is decreased while the flow rate of the alkaline cleaning liquid or the second water is not sufficiently decreased, that is, while the holding duration t (minutes) remains small, the target F value is not reached as can be seen from the formula a. In this case, the alkaline cleaning liquid or the second water is poorly sterilized, and the liquid supply piping 7 is contaminated with bacteria. To avoid this, the procedure of decreasing the temperature after decreasing the flow rate has to be complied with. By complying with the procedure described above, the liquid can be replaced while maintaining the aseptic condition of the inside of the liquid supply piping 7.

The second water in the liquid supply piping 7 is removed with the second liquid, and after it is checked that the second water is replaced with the second liquid, filling with the second liquid is started.

(Second embodiment)

The liquid to be sterilized by the continuous liquid sterilizing apparatus 18 is changed from the first liquid to the second liquid in the method described below. In the first embodiment, the flow rate of the cleaning liquid is increased when the first liquid is replaced with the cleaning liquid and the cleaning liquid is replaced with the second liquid, and in this procedure, the flow rate is increased after increasing the temperature, and the temperature is decreased after the flow rate is decreased. In a second embodiment, the inside of the continuous liquid sterilizing apparatus 18 is cleaned by flowing the cleaning liquid at a flow rate higher than the flow rate of the first liquid while sterilizing the cleaning liquid in the continuous liquid sterilizing apparatus 18 by increasing the temperature and the flow rate of the continuous liquid sterilizing apparatus 18 in parallel in such a manner that the F value does not become lower than the target value, and the second liquid is flowed at a flow rate lower than the flow rate of the cleaning liquid while being sterilized by the continuous liquid sterilizing apparatus 18 by decreasing the temperature and the flow rate of the continuous liquid sterilizing apparatus 18 in parallel in such a manner that the F value does not become lower than the target value. In other respects, the second embodiment is the same as the first embodiment.

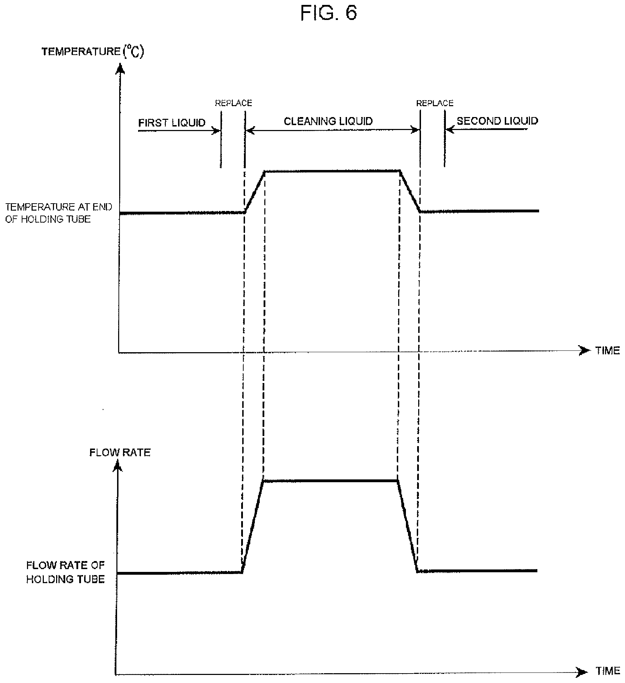

FIG. 6 shows a temporal change of the flow rate measured by the flowmeter 23 provided on the holding tube 14 and a temporal change of the temperature measured by the temperature sensor 10d provided at the end of the holding tube 14 when changing the liquid to be sterilized by the continuous liquid sterilizing apparatus 18 from the first liquid to the second liquid.

By flowing the first liquid at a predetermined temperature and a predetermined flow rate, the first liquid is sterilized by the continuous liquid sterilizing apparatus 18 and filled into the container 4. The F value is calculated from the temperature T°C measured by the temperature sensor 10d at the end of the holding tube 14 and the holding duration t (minutes) of the first liquid in the holding tube 14 calculated from the flow rate in the holding tube 14. The first liquid is sterilized by setting the F value to be equal to or higher than the target value. The sterilized first liquid is cooled by the first-stage cooling portion 15 and the second-stage cooling portion 16 and then charged into the container 4.

After the filling with the first liquid is completed, the cleaning liquid is supplied to the balance tank 5 from the alkaline cleaning liquid supply apparatus 20 or the water supply apparatus 21. The supplied cleaning liquid is flowed through the continuous liquid sterilizing apparatus 18 with the temperature and the flow rate of the holding tube 14 that are sterilization conditions for the first liquid left unchanged, thereby replacing the first liquid with the cleaning liquid while sterilizing the cleaning liquid. The cleaning liquid as a replacement is sterilized by the continuous liquid sterilizing apparatus 18 under the same conditions as those for the first liquid. A mixture of the first liquid and the cleaning liquid is ejected from the aseptic filling machine until the first liquid in the liquid supply piping 7 is completely replaced with the cleaning liquid. It is checked that the first liquid in the liquid supply piping 7 is completely replaced with the cleaning liquid. The check is conducted by measuring the electric conductivity, pH or the like of the ejected mixture.

When flowing the cleaning liquid through the continuous liquid sterilizing apparatus 18 after the filling with the first liquid is completed, cooling by the first-stage cooling portion 15 and the second-stage cooling portion 16 may be stopped, or the cooling conditions may be relaxed. That is, the cleaning liquid does not have to be cooled to room temperature. When ejecting the mixture of the first liquid and the cleaning liquid, the temperature of the supplied cleaning liquid can be increased from room temperature through the heat exchange between the mixture and the supplied cleaning liquid in the heat exchanger 26, so that the energy for heating the cleaning liquid in the continuous liquid sterilizing apparatus 18 can be reduced.

The CIP process for the inside of the liquid supply piping 7 is performed with the cleaning liquid that has replaced the first liquid. In this process, to reduce the duration of the CIP process, the flow rate of the cleaning liquid is increased to flow the cleaning liquid from the continuous liquid sterilizing apparatus 18 to the inside of the liquid supply piping 7 at a flow rate higher than the flow rate of the first liquid. By increasing the flow rate, the holding duration t (minutes) in the holding tube 14 decreases. If only the flow rate is increased while leaving the temperature unchanged, the calculated F value decreases and becomes lower than the target F value, and the cleaning liquid is poorly sterilized. In order to keep the calculated F value equal to or higher than the target value provided that the holding duration is t minutes, the temperature T°C has to be increased in parallel with the flow rate in such a manner that the F value does not become lower than the target value.

The flow rate of the cleaning liquid used for the CIP process that is higher than the flow rate of the first liquid is determined, and the set temperature and the set flow rate of the continuous liquid sterilizing apparatus 18 are gradually increased in parallel while calculating the F value, which is a sterilization value of the continuous liquid sterilizing apparatus 18 for the cleaning liquid, in such a manner that the F value does not become lower than the target value. By flowing the cleaning liquid at a flow rate higher than the predetermined flow rate of the first liquid while sterilizing the cleaning liquid in the continuous liquid sterilizing apparatus 18 in this way, the inside of the continuous liquid sterilizing apparatus 18 is cleaned.

The flow rate measured by the flowmeter 23 provided on the holding tube 14 and the temperature measured by the temperature sensor 10d provided at the end of the holding tube 14 are sent to the controller 17 at intervals of 0.5 seconds, for example, the holding duration t (minutes) of the cleaning liquid in the holding tube 14 is calculated from the flow rate, and the F value is calculated from the holding duration t (minutes) and the temperature T°C measured by the temperature sensor 10d. The temperature and the flow rate are increased in parallel in such a manner that the calculated F value does not become lower than the target value.

The controller 17 calculates the F value in real time from the holding duration t (minutes) and the temperature T °C, and increases the flow rate of the continuous liquid sterilizing apparatus 18 to a predetermined higher flow rate. In this process, the controller 17 increases the temperature in parallel with the flow rate in such a manner that the F value does not become lower than the target value.

The flow rate can be easily increased by raising the power of a pump. The actual temperature of the cleaning liquid is not easily increased by increasing the temperature setting. The controller 17 first increases the temperature setting and then increases the flow rate while checking that the temperature is surely increased.

The higher flow rate is appropriately 1.1 times or more and 5 times or less the flow rate of the first liquid. If the flow rate is less than 1.1 times the flow rate of the first liquid, the cleaning effect of the CIP process is not improved, and the duration of the CIP process cannot be sufficiently reduced. If the flow rate is more than 5 times the flow rate of the first liquid, a high-capacity pump is required, and the facility cost increases. The flow rate is preferably 1.3 times or more and 3 times or less the flow rate of the first liquid.

As shown in FIG. 6, after the first liquid is replaced with the cleaning liquid, the flow rate of the continuous liquid sterilizing apparatus 18 and the temperature measured by the temperature sensor 10d at the end of the holding tube 14 are gradually increased in parallel, and the cleaning is performed when the flow rate reaches a predetermined flow rate. In the stage of increasing the temperature and the flow rate, the calculated F value does not become lower than the target value. The temperature and the flow rate may be increased in parallel while replacing the first liquid with the cleaning liquid.

After the first liquid is replaced with the cleaning liquid, the flow rate of the cleaning liquid is set at a flow rate higher than the flow rate of the first liquid. The flow rate is increased to the higher flow rate while increasing the temperature of the cleaning liquid, and when the flow rate reaches the higher flow rate, the settings of the temperature and the flow rate are fixed, and a circulation path is configured to circulate the sterilized cleaning liquid. The circulation path may be the upstream circulation path that extends from the upstream piping portion 7a to the upstream feedback path 6a via the manifold valve 8 as shown in FIG. 2. The part downstream of the manifold valve 8 may be filled with the sterilized cleaning liquid, and the CIP process for the downstream circulation path may be performed by circulating the sterilized cleaning liquid through the downstream circulation path formed by the downstream piping portion 7b and the downstream feedback path 6b. A heating apparatus may be provided on the downstream piping portion 7b or the downstream feedback path 6b to heat the circulated cleaning liquid.

As shown in FIG. 3, the cleaning liquid may be flowed through the upstream piping portion 7a, the downstream piping portion 7b, the downstream feedback path 6b and the upstream feedback path 6a, that is, a circulation path from the continuous liquid sterilizing apparatus 18 to the filling nozzles 2a may be formed, and the CIP process may be performed by circulating the cleaning liquid through the circulation path.

The CIP process is performed by circulating, through the configured circulation path, the cleaning liquid sterilized to have an F value equal to or higher than the target F value under the sterilization conditions of the continuous liquid sterilizing apparatus 18, that is, the increased temperature and the higher flow rate. The cleaning liquid held in the holding tube 14 may be flowed to downstream without being cooled by the first-stage cooling portion 15 and the second-stage cooling portion 16. The cleaning liquid heated for sterilization has an improved cleaning effect. Alternatively, the cleaning liquid to be flowed may be appropriately cooled to a temperature equal to or higher than 60°C and equal to or lower than 95°C, which is a temperature that is equal to or lower than the boiling point of water and has a higher cleaning effect. Alternatively, the cleaning liquid to be flowed may be cooled to room temperature.

The CIP process is performed for a predetermined duration. The predetermined duration can be a duration empirically determined from the kind of the first liquid, the total flow rate of the first liquid flowed for filling, the sterilization temperature and the like. The predetermined duration of the CIP process may be determined by calculating the overall heat transfer coefficient of the second-stage heating portion 13 of the continuous liquid sterilizing apparatus 18 as described later.

As shown in FIG. 6, the CIP process continues while the cleaning liquid is flowing, and the CIP process is determined to be completed when the CIP process has been performed for a predetermined duration. After that, the set temperature and the set flow rate of the continuous liquid sterilizing apparatus 18 are gradually decreased in parallel in such a manner that the F value does not become lower than the target value, and the temperature and the flow rate are set at the sterilization temperature and the flow rate for the second liquid to be filled next. The flow rate is a flow rate lower than the flow rate of the cleaning liquid. After the temperature and the flow rate of the cleaning liquid are set at the sterilization temperature and the flow rate for the second liquid, the cleaning liquid is replaced with the second liquid. The temperature and the flow rate may be decreased in parallel while replacing the cleaning liquid with the second liquid.

When the set temperature and the set flow rate of the continuous liquid sterilizing apparatus 18 are gradually decreased in parallel, the flow rate measured by the flowmeter 23 provided on the holding tube 14 and the temperature measured by the temperature sensor 10d provided at the end of the holding tube 14 are sent to the controller 17, the holding duration t (minutes) of the cleaning liquid in the holding tube 14 is calculated from the flow rate, and the F value is calculated from the holding duration t (minutes) and the temperature T°C measured by the temperature sensor 10d. The flow rate and the temperature are decreased in parallel in such a manner that the calculated F value becomes lower than the target value. It is checked that the temperature measured by the temperature sensor 10d has been decreased to the sterilization temperature for the second liquid and the flow rate measured by the flowmeter provided on the holding tube 14 has been decreased to the predetermined flow rate of the second liquid. After that, the cleaning liquid is replaced with the second liquid.

The F value calculated from the sterilization temperature T°C for the second liquid and the holding duration t (minutes) of the second liquid in the holding tube 14 calculated from the flow rate is equal to or higher than the target value.

The sterilization conditions for the second liquid have to be equivalent to or looser than the sterilization conditions for the first liquid. When the pH of the first liquid is equal to or higher than 4.6, the pH of the second liquid can be any value. However, when the pH of the first liquid is equal to or higher than 4.0 and lower than 4.6, the pH of the second liquid must not be equal to or higher than 4.6. This is because when bacteria that survive under the sterilization conditions for the first liquid remain in the liquid supply piping 7, the bacteria remaining in the liquid supply piping 7 cannot be killed by sterilizing the second liquid under sterilization conditions for a pH equal to or higher than 4.6.

After the cleaning liquid in the liquid supply piping 7 is removed with the second liquid, it is checked that the cleaning liquid has been replaced with the second liquid, and then filling with the second liquid is started. By replacing the first liquid with the cleaning liquid and replacing the cleaning liquid with the second liquid while sterilizing the first liquid, the cleaning liquid and the second liquid in the continuous liquid sterilizing apparatus 18 by keeping the sterilization value equal to or higher than the target F value, the liquids to be filled can be changed by performing only the CIP process, without performing the SIP process. By increasing the flow rate of the cleaning liquid, the liquids can be changed by reducing the duration of the CIP process.

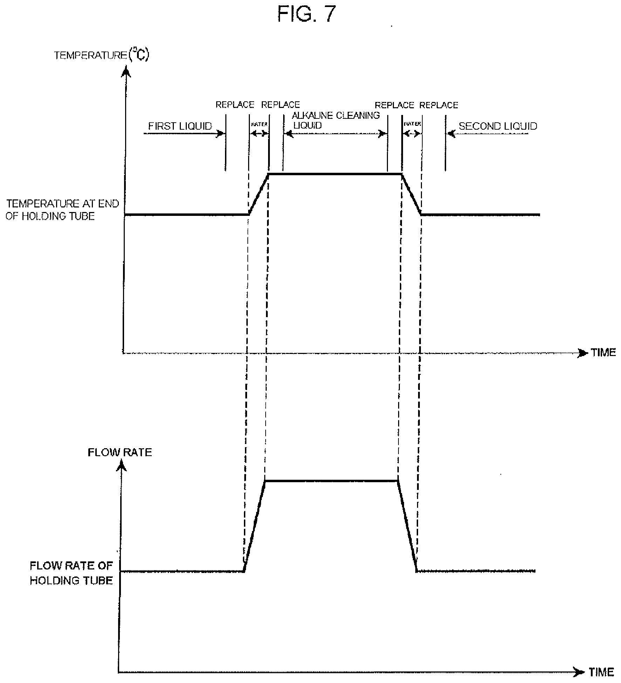

A method of replacing the first liquid with the second liquid by replacing the first liquid with the cleaning liquid and replacing the cleaning liquid as a replacement with the second liquid has been describe above. Hereinafter, a method of replacing the first liquid with the second liquid by replacing the first liquid with a first water as a cleaning liquid, replacing the first water as a replacement with an alkaline cleaning liquid, replacing the alkaline cleaning liquid as a replacement with a second water and replacing the second water as a replacement with the second liquid as shown in FIG. 7 will be described.

By flowing the first liquid at a predetermined temperature and a predetermined flow rate, the first liquid is sterilized by the continuous liquid sterilizing apparatus 18 and filled into the container 4. The F value is calculated from the temperature T°C measured by the temperature sensor 10d at the end of the holding tube 14 and the holding duration t (minutes) of the first liquid in the holding tube 14 calculated from the flow rate in the holding tube 14. The first liquid is sterilized by setting the calculated F value to be equal to or higher than the target value. The sterilized first liquid is cooled by the first-stage cooling portion 15 and the second-stage cooling portion 16 and then filled into the container 4.

After the filling with the first liquid is completed, water is supplied to the balance tank 5 from the water supply apparatus 21, and the first liquid is replaced with first water while leaving the temperature and the flow rate that are sterilization conditions of the continuous liquid sterilizing apparatus 18 for the first liquid unchanged. The supplied first water is sterilized by the continuous liquid sterilizing apparatus 18 under the same conditions as those for the first liquid. A mixture of the first liquid and the first water is ejected from the aseptic filling machine until the first liquid in the liquid supply piping 7 is completely replaced with the first water. It is checked that the first liquid in the liquid supply piping 7 is completely replaced with the first water. The check is conducted by measuring the electric conductivity of the ejected mixture.

After the filling with the first liquid is completed, the first water is supplied to the continuous liquid sterilizing apparatus 18 and heated and sterilized. In this process, the first liquid may be removed without cooling the first water to room temperature, by stopping cooling by the first-stage cooling portion 15 and the second-stage cooling portion 16 or relaxing the cooling conditions. When ejecting the mixture of the first liquid and the first water, the temperature of the first water supplied to the balance tank 5 can be increased from room temperature through the heat exchange between the mixture and the supplied first water in the heat exchanger 26, so that the energy for heating the first water in the continuous liquid sterilizing apparatus 18 can be reduced.

After the first liquid in the liquid supply piping 7 is replaced with the first water, the first water is replaced with the alkaline cleaning liquid. The CIP process for the inside of the liquid supply piping 7 is performed with the alkaline cleaning liquid that has replaced the first water. After the CIP process is completed, the alkaline cleaning liquid is replaced with second water, and the second water as a replacement is replaced with the second liquid. By replacing the first liquid supplied to the continuous liquid sterilizing apparatus 18 with the second liquid in this way, the liquid to be filled into the container 4 can be changed from the first liquid to the second liquid without performing the SIP process for the inside of the liquid supply piping 7.

After the first liquid is replaced with the first water, and the first water as a replacement is replaced with the alkaline cleaning liquid, the alkaline cleaning liquid may be directly replaced with the second liquid without being replaced with the second water. The first liquid may be replaced with the alkaline cleaning liquid, the alkaline cleaning liquid as a replacement may be replaced with the second water, and the second water may be replaced with the second liquid.

When the first liquid is replaced with the alkaline cleaning liquid, the alkaline cleaning liquid, which has a cleaning effect, is wasted until the first liquid is removed. By replacing the first liquid with the first water, the possibility that the CIP process is performed in a state where the first liquid is mixed in the alkaline cleaning liquid is eliminated.

By replacing the alkaline cleaning liquid with the second water and then replacing the second water with the second liquid, the alkaline cleaning liquid can be prevented from being mixed in the second liquid. The second liquid preferably replaces the second water in order to prevent the alkaline cleaning liquid from being mixed in the second liquid.

When performing the CIP process for the inside of the liquid supply piping 7 with the alkaline cleaning liquid, to reduce the duration of the CIP process, the flow rate of the alkaline cleaning liquid is increased to flow the alkaline cleaning liquid from the continuous liquid sterilizing apparatus 18 to the inside of the liquid supply piping 7 at a flow rate higher than the flow rate of the first liquid. By increasing the flow rate, the holding duration t (minutes) in the holding tube 14 decreases. As a result, the calculated F value decreases, and the cleaning liquid at the higher flow rate is poorly sterilized.

As shown in FIG. 7, the first liquid in the liquid supply piping 7 is replaced with the first water without changing the sterilization conditions of the continuous liquid sterilizing apparatus 18. The method of replacing the first liquid with the first water is the same as the method of replacing the first liquid with the cleaning liquid described above. After the first liquid is replaced with the first water, if the flow rate of the water is increased, the holding duration t (minutes) in the holding tube 14 decreases. If only the flow rate is increased while leaving the temperature unchanged, the calculated F value decreases and becomes lower than the target F value, and the water is poorly sterilized. In order to keep the calculated F value equal to or higher than the target value provided that the holding duration is t minutes, the temperature T°C has to be increased in parallel with the flow rate when increasing the flow rate.

The CIP process for the inside of the liquid supply piping 7 is performed with the alkaline cleaning liquid that replaces the first water. In this process, in order to reduce the duration of the CIP process, the flow rate of the alkaline cleaning liquid is increased, and the alkaline cleaning liquid is flowed at a flow rate higher than the flow rate of the first liquid from the continuous liquid sterilizing apparatus 18 to the inside of the liquid supply piping 7.

The flow rate of the first water that is higher than the flow rate of the first liquid is determined, and the set temperature and the set flow rate of the continuous liquid sterilizing apparatus 18 are gradually increased in parallel while calculating the F value, which is a sterilization value of the continuous liquid sterilizing apparatus 18 for the water, in such a manner that the F value does not become lower than the target value, thereby flowing the first water at a flow rate that is higher than the predetermined flow rate of the first liquid while sterilizing the first water in the continuous liquid sterilizing apparatus 18. By increasing the flow rate, the holding duration t (minutes) in the holding tube 14 decreases. If only the flow rate is increased while leaving the temperature unchanged, the calculated F value decreases and becomes lower than the target F value, and the water is poorly sterilized. In order to keep the calculated F value equal to or higher than the target value provided that the holding duration is t minutes, the temperature T°C has to be increased in parallel with the flow rate when increasing the flow rate.

The flow rate measured by the flowmeter 23 provided on the holding tube 14 and the temperature measured by the temperature sensor 10d provided at the end of the holding tube 14 are sent to the controller 17 at intervals of 0.5 seconds, for example, the holding duration t (minutes) of the cleaning liquid in the holding tube 14 is calculated from the flow rate, and the F value is calculated from the holding duration t (minutes) and the temperature T°C measured by the temperature sensor 10d. The temperature and the flow rate are increased in parallel in such a manner that the calculated F value does not become lower than the target value.

The controller 17 calculates the F value in real time from the holding duration t (minutes) and the temperature T°C, and increases the flow rate of the continuous liquid sterilizing apparatus 18 to a predetermined higher flow rate. In this process, the controller 17 increases the temperature in parallel with the flow rate in such a manner that the F value does not become lower than the target value.

The higher flow rate is appropriately 1.1 times or more and 5 times or less the flow rate of the first liquid. If the flow rate is less than 1.1 times the flow rate of the first liquid, the cleaning effect of the CIP process is not improved, and the duration of the CIP process cannot be sufficiently reduced. If the flow rate is more than 5 times the flow rate of the first liquid, a high-capacity pump is required, and the facility cost increases. The flow rate is preferably 1.3 times or more and 3 times or less the flow rate of the first liquid.

As shown in FIG. 7, after the first liquid is replaced with the first water, the flow rate of the continuous liquid sterilizing apparatus 18 and the temperature measured by the temperature sensor 10d at the end of the holding tube 14 are gradually increased in parallel, and the first water is replaced with the alkaline cleaning liquid when the flow rate reaches a predetermined flow rate. In the stage of increasing the temperature and the flow rate in parallel, the calculated F value does not become lower than the target value. The temperature and the flow rate may be increased while replacing the first liquid with the first water.

After the first water is replaced with the alkaline cleaning liquid, a circulation path for the sterilized alkaline cleaning liquid that flows at the higher flow rate is configured. The circulation path may be the upstream circulation path that extends from the upstream piping portion 7a to the upstream feedback path 6a via the manifold valve 8 as shown in FIG. 2. The part downstream of the manifold valve 8 may be filled with the sterilized alkaline cleaning liquid, and the CIP process for the downstream circulation path may be performed by circulating the sterilized alkaline cleaning liquid through the downstream circulation path formed by the downstream piping portion 7b and the downstream feedback path 6b. A heating apparatus may be provided on the downstream piping portion 7b or the downstream feedback path 6b to heat the circulated cleaning liquid, thereby improving the cleaning effect.

The CIP process is performed by circulating, through the configured circulation path, the alkaline cleaning liquid sterilized to have an F value equal to or higher than the target F value under the sterilization conditions including the temperature increased by the continuous liquid sterilizing apparatus 18 and the higher flow rate. The alkaline cleaning liquid held at high temperature in the holding tube 14 may be flowed to downstream without being cooled by the first-stage cooling portion 15 and the second-stage cooling portion 16. The alkaline cleaning liquid heated for sterilization has a higher cleaning effect. Alternatively, the alkaline cleaning liquid to be flowed may be appropriately cooled to a temperature equal to or higher than 60°C and equal to or lower than 95°C, which is a temperature that is equal to or lower than the boiling point of water and has a higher cleaning effect. Alternatively, the alkaline cleaning liquid to be flowed may be cooled to room temperature.

The CIP process is performed for a predetermined duration. The predetermined duration can be a duration empirically determined from the kind of the first liquid, the total flow rate of the first liquid flowed for filling, the sterilization temperature and the like. The predetermined duration may be determined by calculating the overall heat transfer coefficient of the second-stage heating portion 13 of the continuous liquid sterilizing apparatus 18 as described above.

As shown in FIG. 7, the CIP process continues while the alkaline cleaning liquid is flowing, and after the cleaning with the alkaline cleaning liquid is performed for the predetermined duration, the alkaline cleaning liquid is replaced with the second water. As with the first water, the second water is supplied from the water supply apparatus 21 to the balance tank 5, and the supplied second water is sterilized by the continuous liquid sterilizing apparatus 18.

After the cleaning with the alkaline cleaning liquid, the flow rate of the second water that is flowed instead of the alkaline cleaning liquid is decreased. The decreased flow rate is a flow rate determined according to the sterilization conditions for sterilization of the second liquid to be filled next by the continuous liquid sterilizing apparatus 18. The flow rate of the second liquid is lower than the flow rate of the alkaline cleaning liquid. Furthermore, the sterilization temperature for the second water is decreased to the sterilization temperature for the second liquid. The set temperature and the set flow rate of the second water are gradually decreased to the sterilization temperature and the flow rate of the second liquid in parallel. The temperature and the flow rate may be decreased while replacing the second water with the second liquid.

When the set temperature and the set flow rate of the continuous liquid sterilizing apparatus 18 are gradually decreased in parallel, the flow rate measured by the flowmeter 23 provided on the holding tube 14 and the temperature measured by the temperature sensor 10d provided at the end of the holding tube 14 are sent to the controller 17. The holding duration t (minutes) of the cleaning liquid in the holding tube 14 is calculated from the flow rate, and the F value is calculated from the holding duration t (minutes) and the temperature T°C measured by the temperature sensor 10d. The flow rate and the temperature are decreased in parallel in such a manner that the calculated F value becomes lower than the target value. It is checked that the temperature measured by the temperature sensor 10d has been decreased to the sterilization temperature for the second liquid and the flow rate measured by the flowmeter provided on the holding tube 14 has been decreased to the predetermined flow rate of the second liquid. After that, the second water is replaced with the second liquid.

The second water in the liquid supply piping 7 is removed with the second liquid, and after it is checked that the second water is replaced with the second liquid, filling with the second liquid is started.

(Calculation method for overall heat transfer coefficient)

The continuous liquid sterilizing apparatus 18 is provided with the temperature sensors 10a to 10f at different positions as shown in FIG. 1. The position at which the temperature sensor 10b is arranged is the inlet of the second-stage heating portion 13, and the position at which the temperature sensor 10c is arranged is the outlet of the second-stage heating portion 13. Information on the temperatures measured by these temperature sensors is transmitted to the controller 17.

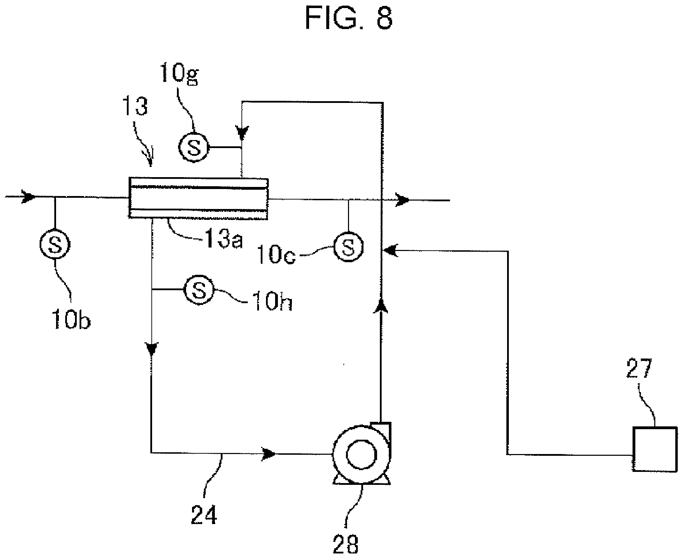

As shown in FIG. 8, to heat the second-stage heating portion 13, which is located at the most downstream position among the heating portions, a heating medium line 24 for supplying a heating medium is connected to the second-stage heating portion 13.

The heating medium line 24 is provided with a heated steam supply portion 27 that supplies heated steam to the heating medium line 24, and the heating medium flowing in the heating medium line 24 is heated to a higher temperature by heated steam supplied from the heated steam supply portion 27. The heating medium may be heated by an electric heater. The heating medium line 24 is further provided with a pressure pump 28. The heating medium is appropriately water. As an alternative to water, oil can also be used.

The heating medium line 24 supplies the heating medium to a heating pipe 13a of the second-stage heating portion 13. As shown in FIG. 8, the heating medium flows in the heating pipe 13a in the opposite direction to the direction in which the liquid flows in the liquid supply piping 7. The heating medium may be flowed in the same direction as the direction in which the liquid flows in the liquid supply piping 7. A temperature sensor 10g is provided at an inlet of the heating pipe 13a, and a temperature sensor 10h is provided at an outlet of the heating pipe 13a.

As shown in FIG. 8, the heating medium flowing in the heating medium line 24 is supplied to the heating pipe 13a and heats the liquid flowing in the second-stage heating portion 13. Although the heating medium that heats the liquid in the second-stage heating portion 13 has a lowered temperature at the outlet of the heating pipe 13a, the heating medium is increased in temperature by the heated steam supplied from the heated steam supply portion 27, and the heating medium increased in temperature is supplied to the heating pipe 13a and circulates.

The second-stage heating portion 13 of the continuous liquid sterilizing apparatus 18 is a portion that heats and sterilizes a content at high temperature, and soil such as burnt deposit is likely to occur on the inner surface of the heating pipe 13a. The overall heat transfer coefficient of the heating pipe 13a of the second-stage heating portion 13 that is most likely to be soiled is calculated to efficiently perform the CIP process for the inside of the continuous liquid sterilizing apparatus 18. The overall heat transfer coefficient can be calculated for the other heating portions and cooling portions of the continuous liquid sterilizing apparatus 18. The overall heat transfer coefficient should be calculated for all the heating portions and cooling portions, and the CIP process should be ended when all the overall heat transfer coefficients reach a target value. However, the part where the amount of residue of the liquid is the largest is the heating portion at the downstream end, and it can be determined that the CIP process is completed when the overall heat transfer coefficient of the heating portion at the downstream end reaches a target value, and this can be regarded as the predetermined time of the CIP process.

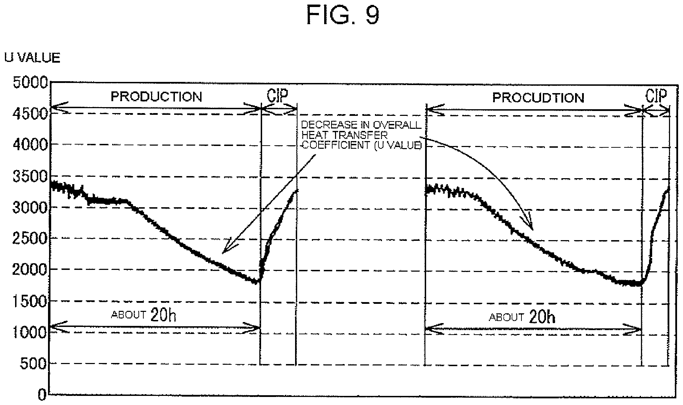

FIG. 9 shows a temporal change of the overall heat transfer coefficient (U value) with respect to production time. Higher overall heat transfer coefficient (U value) means that heat is more likely to be transferred. The overall heat transfer coefficient of the heating pipe 13a gradually decreases as liquid-filled products are produced because of deposits such as burnt deposit of the liquid formed on the inside of the heating pipe 13a in the course of the sterilization of the liquid. The overall heat transfer coefficient having decreased in the course of production is increased by performing the CIP process, and the overall heat transfer coefficient before the start of production of the liquid-filled products is recovered. That is, a basis for completion of the CIP process is that the overall heat transfer coefficient of the heating pipe 13a recovers to the overall heat transfer coefficient in the state where no residue of the liquid is deposited in the heating pipe 13a. A target value of the decreased overall heat transfer coefficient is determined, and it is determined that the CIP process is completed when the overall heat transfer coefficient of the heating pipe 13a reaches the target value as a result of the CIP process. In this way, no time is wasted in the CIP process, and the CIP process can be efficiently performed.

The controller 17 stores various kinds of data, calculates the overall heat transfer coefficient from the measured temperatures transmitted from the heating pipe 13a of the second-stage heating portion 13, determines whether or not the calculated overall heat transfer coefficient reaches the target value, determines that the CIP process is completed when the overall heat transfer coefficient reaches the target value, and completes the CIP process for the inside of the liquid supply piping 7. Although this determination of completion is made for the second-stage heating portion 13 of the continuous liquid sterilizing apparatus 18, since the second-stage heating portion 13 of the continuous liquid sterilizing apparatus 18 is most heavily soiled, the determination of completion of the CIP process for the second-stage heating portion 13 of the continuous liquid sterilizing apparatus 18 can be regarded as the determination of completion of the CIP process for the inside of the liquid supply piping 7. That is, the time required for the overall heat transfer coefficient to reach the target value can be regarded as the predetermined time of the CIP process.

To calculate the overall heat transfer coefficient, as shown in FIG. 8, the temperature sensor 10b is provided at the inlet for the cleaning liquid of the heating pipe 13a of the second-stage heating portion 13 of the continuous liquid sterilizing apparatus 18, the temperature sensor 10c is provided at the outlet for the cleaning liquid of the heating pipe 13a, the temperature sensor 10g is provided at the inlet for the heating medium of the heating pipe 13a, and the temperature sensor 10h is provided at the outlet for the heating medium of the heating pipe 13a. These temperature sensors measure temperature, the temperature from the temperature sensor 10b is denoted as T1, the temperature from the temperature sensor 10c is denoted as T2, the temperature from the temperature sensor 10g is denoted as T3, and the temperature from the temperature sensor 10h is denoted as T4.

The measured temperatures T1, T2, T3 and T4 are transmitted to the controller 17, and the controller 17 calculates the overall heat transfer coefficient. The overall heat transfer coefficient is determined as follows.

First, a logarithmic mean temperature difference ΔT is determined. The logarithmic mean temperature difference ΔT is determined according to the following formula (1).

[Formula 1]

$$\Delta T = \left| \frac{((T4-T1) - (T3-T2))}{\ln((T4-T1)/(T3-T2))} \right| \quad \text{(Formula 1)}$$

A heat quantity Q in the second-stage heating portion 13 is then determined from the temperatures T1 and T2 and a flow rate R(L/h). Provided that the specific heat is 1 (kcal/kg·°C), and the specific weight is 1 (kg/L),

$$Q = 1 \times 1 \times R \times (T2 - T1) \quad \text{(Formula 2)}$$

The flow rate R is measured by the flowmeter 23 and is transmitted to the controller 17. A flowmeter may be provided in the heating pipe 13a of the second-stage heating portion 13, and the measurement from the flow meter may be used.

A heat transfer area A ($m^2$) of the heating pipe 13a of the second-stage heating portion 13 is determined in advance.

On this condition, the controller 17 calculates the overall heat transfer coefficient (U value) of the second-stage heating portion 13 according to the following formula (formula 3).

$$U = Q/(A \times \Delta T) \quad \text{(Formula 3)}$$

As described above, the overall heat transfer coefficient of the second-stage heating portion 13 is calculated during the CIP process, and when the overall heat transfer coefficient reaches a target value, it can be determined that the CIP process is completed and the process can proceed to the next step. Therefore, the CIP process need not be performed for an unnecessarily long time and can be efficiently performed.

The controller 17 determines that the CIP process is completed when the calculated overall heat transfer coefficient reaches the target value determined in advance.

Reference Signs List

| | |
|---|---|
| 2 | filling machine |
| 6 | feedback path |
| 6a | upstream feedback path |
| 6b | downstream feedback path |
| 7 | liquid supply piping |
| 7a | upstream piping portion |
| 7b | downstream piping portion |
| 10 | temperature sensor |
| 12 | first-stage heating portion |
| 13 | second-stage heating portion |
| 14 | holding tube |
| 15 | first-stage cooling portion |
| 16 | second-stage cooling portion |
| 18 | continuous liquid sterilizing apparatus |
| 20 | alkaline cleaning liquid supply apparatus |
| 21 | water supply apparatus |
| 23 | flowmeter |

Claims

1.  A liquid replacement method for a continuous liquid sterilizing apparatus (18) that allows a liquid to flow therethrough and sterilizes the liquid by heating the liquid from outside,

    wherein a first liquid is sterilized by the continuous liquid sterilizing apparatus (18),
    an inside of the continuous liquid sterilizing apparatus (18) is cleaned by flowing a cleaning liquid at a flow rate higher than a flow rate of the first liquid while sterilizing the cleaning liquid by the continuous liquid sterilizing apparatus (18) in such a manner that an F value does not become lower than a target F value, and
    a second liquid is flowed at a flow rate lower than the flow rate of the cleaning liquid while being sterilized by the continuous liquid sterilizing apparatus (18) in such a manner that the F value does not become lower than the target F value.

2.  The liquid replacement method for a continuous liquid sterilizing apparatus (18) according to claim **1,**

    wherein a temperature corresponding to the higher flow rate at which the F value does not become lower than the target F value is calculated from the higher flow rate, and after a temperature of the continuous liquid sterilizing apparatus (18) is increased to the calculated temperature corresponding to the higher flow rate, the cleaning liquid is flowed at the higher flow rate while being sterilized, and
    a temperature corresponding to the lower flow rate at which the F value does not become lower than the target F value is calculated from the lower flow rate, and after a flow rate of the continuous liquid sterilizing apparatus (18) is decreased to the lower flow rate, the temperature of the continuous liquid sterilizing apparatus (18) is set at the calculated temperature corresponding to the lower flow rate.

3.  The liquid replacement method for a continuous liquid sterilizing apparatus (18) according to claim 1,

    wherein after the first liquid is replaced with the cleaning liquid or while the first liquid is being replaced with the cleaning liquid,
    the temperature and the flow rate of the continuous liquid sterilizing apparatus (18) are increased in parallel in such a manner that an F value that is a sterilization value of the continuous liquid sterilizing apparatus (18) for the cleaning liquid does not become lower than a target value while calculating the F value,
    the inside of the continuous liquid sterilizing apparatus (18) is cleaned by flowing the cleaning liquid at a flow rate higher than the flow rate of the first liquid while sterilizing the cleaning liquid by the continuous liquid sterilizing apparatus (18),
    the temperature and the flow rate of the continuous liquid sterilizing apparatus (18) are decreased in parallel in such a manner that the F value does not become lower than the target value, and
    the second liquid is flowed at a flow rate lower than the flow rate of the cleaning liquid while being sterilized by the continuous liquid sterilizing apparatus (18).

4.  The liquid replacement method for a continuous liquid sterilizing apparatus according to any one of claims 1 to 3,

    wherein the F value is calculated from a holding duration t (minutes) in a holding portion of the continuous liquid sterilizing apparatus (18) determined from the flow rate of the liquid or the cleaning liquid flowing in the continuous liquid sterilizing apparatus (18) and a temperature T°C of the liquid or the cleaning liquid according to a formula a:

    $$F = t \times 10^{(T - T0)/Z} ...\text{Formula a}$$

    where T0°C and Z°C are constants determined according to the liquid.

5.  The liquid replacement method for a continuous liquid sterilizing apparatus (18) according to claim 4,
    wherein the flow rate is a flow rate of the holding portion, and the temperature is a temperature at an end of the holding portion.

6.  The liquid replacement method for a continuous liquid sterilizing apparatus (18) according to claim 4,

    wherein the holding duration is calculated from the higher flow rate of the cleaning liquid, the temperature T°C is calculated from the calculated holding duration and the target value of the F value according to the formula a, and the determined temperature T°C is regarded as the temperature corresponding to the higher flow rate, and

the holding duration is calculated from the lower flow rate, the temperature T°C is calculated from the calculated holding duration and the target value of the F value according to the formula a, and the determined temperature T °C is regarded as the temperature corresponding to the lower flow rate.

7. The liquid replacement method for a continuous liquid sterilizing apparatus (18) according to any one of claims 1 to 3, wherein the cleaning liquid is an alkaline cleaning liquid that contains an alkaline compound.

8. The liquid replacement method for a continuous liquid sterilizing apparatus (18) according to any one of claims 1 to 3, wherein the cleaning liquid is first water, and after the first liquid is replaced with the first water, the first water is replaced with an alkaline cleaning liquid that contains an alkaline compound.

9. The liquid replacement method for a continuous liquid sterilizing apparatus (18) according to any one of claims 1 to 3, wherein the cleaning liquid is an alkaline cleaning liquid that contains an alkaline compound, and after the alkaline cleaning liquid is replaced with second water, the second water is replaced with the second liquid.

FIG. 1

FIG. 2

FIG. 3

FIG. 4

TEMPERATURE (°C)

TEMPERATURE AT END OF
HOLDING TUBE

FLOW RATE

FLOW RATE OF HOLDING TUBE

FIRST LIQUID

REPLACE

CLEANING LIQUID

REPLACE

SECOND LIQUID

TIME

FIG. 5

FIG. 6

FIG. 7

TIME

FLOW RATE OF
HOLDING TUBE

FLOW RATE

TIME

TEMPERATURE AT END
OF HOLDING TUBE

SECOND LIQUID | WATER | ALKALINE CLEANING LIQUID | WATER | FIRST LIQUID

REPLACE REPLACE | REPLACE REPLACE | REPLACE REPLACE

TEMPERATURE(°C)

29

# FIG. 8

FIG. 9

## INTERNATIONAL SEARCH REPORT

| International application No. |
| --- |
| **PCT/JP2023/039962** |

**A. CLASSIFICATION OF SUBJECT MATTER**

*B67C 3/00*(2006.01)i
FI: B67C3/00 A

According to International Patent Classification (IPC) or to both national classification and IPC

**B. FIELDS SEARCHED**

Minimum documentation searched (classification system followed by classification symbols)

B67C3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-64722 A (DAI NIPPON PRINTING CO., LTD.) 25 April 2019 (2019-04-25) | 1-9 |
| A | JP 2017-114496 A (DAI NIPPON PRINTING CO., LTD.) 29 June 2017 (2017-06-29) | 1-9 |

☐ Further documents are listed in the continuation of Box C.    ☑ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **27 November 2023** | **12 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT | | International application No. |
|---|---|---|
| Information on patent family members | | **PCT/JP2023/039962** |

| Patent document cited in search report | | | Publication date (day/month/year) | Patent family member(s) | | | Publication date (day/month/year) |
|---|---|---|---|---|---|---|---|
| JP | 2019-64722 | A | 25 April 2019 | US | 2020/0277178 | A1 | |
| | | | | WO | 2019/069967 | A1 | |
| | | | | EP | 3693329 | A1 | |
| | | | | CN | 111183111 | A | |
| JP | 2017-114496 | A | 29 June 2017 | US | 2018/0334372 | A1 | |
| | | | | WO | 2017/111047 | A1 | |
| | | | | EP | 3395750 | A1 | |
| | | | | CN | 108290729 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61092555 A
- JP 2007215893 A
- JP 2007022600 A
- JP 2018058641 A
- JP 2017114496 A